# EUROPEAN PATENT SPECIFICATION

(11) **EP 3 067 818 B1**
(45) Date of publication and mention of the grant of the patent: **26.08.2020**
(21) Application number: 16159325.6
(22) Date of filing: 09.03.2016
(51) Int. Cl.: G06F 21/62

(54) **USER INFORMATION PROCESSING METHOD AND ELECTRONIC DEVICE SUPPORTING THE SAME**
BENUTZERINFORMATIONSVERARBEITUNGSVERFAHREN UND ELEKTRONISCHE VORRICHTUNG, DIE DIESE UNTERSTÜTZT
PROCÉDÉ DE TRAITEMENT D'INFORMATIONS UTILISATEURS ET DISPOSITIF ÉLECTRONIQUE METTANT EN OEUVRE CELUI-CI

(30) Priority: 09.03.2015 KR 20150032547
(43) Date of publication of application: 14.09.2016
(73) Proprietor: Samsung Electronics Co., Ltd., Gyeonggi-do 16677 (KR)
(72) Inventor: EOM, Yu Youl, 16927 Yongin-si (KR); LEE, Suk Hyung, 06621 Seoul (KR); LEE, Chang Ho, 16532 Suwon-si (KR); JIN, Pyeong Gyu, 16548 Suwon-si (KR); YOO, Jae Bong, 13555 Seongnam-si (KR); JEONG, Deung Hyeon, 13617 Seongnam-si (KR)
(74) Representative: Nederlandsch Octrooibureau

(56) References cited:
- GB-A- 2 475 877
- US-A1- 2005 005 145
- US-A1- 2006 070 126
- US-A1- 2007 220 061
- US-A1- 2010 049 807
- US-A1- 2012 246 719
- US-A1- 2013 097 652

## Description

### PRIORITY

This application claims priority to Korean Patent Application No. 10-2015-0032547, filed March 09, 2015.

### BACKGROUND OF THE INVENTION

### 1. Field of the Invention

The present disclosure relates to a method and apparatus capable of controlling a transmission of user information to an external device.

### 2. Background of the Invention

With the developments of wired/wireless internet, users are able to use the internet freely and to obtain a variety of information through the internet. Meanwhile, the contents providers (hereinafter referred to as "CPs") who provide information to the users through the internet provide various contents to induce of the users access.

The CPs want to configure the screen, in which the user is able to easily see the contents, which the user wants, from among various contents. This is a kind of the personalized service to satisfy the user's desire by providing the screen which allows a user to more quickly and easily access the desired information. For the personalized service provided based on user information, an electronic device transmits the user information, for example, use history information and the like of the electronic device, to the CPs.

However, in the process where user information is provided to the CPs, the users may not receive or may be very difficult to know a user information-associated policy, for example, an information provision time, a kind of information, a purpose of the information use, information about the CP which receives information, or the like. Furthermore, user information provided to a specific CP may be provided to another CP without permission or an awareness of a user according to the arbitrary agreement of the specific CP. In this case, user information provided to the CP is being used or shared indiscreetly.

US2007220061 discloses a method for providing protection against leakage of sensitive information assets from the enterprise, using content meta-data and rules-based policies. US2005005145 discloses a method that includes steps of receiving input of sensitive information from a user; computing a data shadow of the sensitive information for storage in a repository; based on the data shadow stored in the repository, detecting any attempt to transmit the sensitive information; and blocking any detected attempt to transmit the sensitive information that is not authorized by the user.

### SUMMARY OF THE INVENTION

To address the above-discussed deficiencies, it is a primary object to provide at least the advantages described below. Accordingly, an aspect of the present disclosure is to provide a method capable of providing the user information-associated policy more intuitively in providing user information to a CP and an electronic device supporting the same.

In accordance with a first aspect of the present disclosure, an electronic device includes a display configured to output an object, and a processor configured to manage session connection between the electronic device and an external server device and cause the display to display an information provision state object indicating a user information transmission state.

In accordance with a second aspect of the present disclosure, a method for processing user information in an electronic device includes managing a session connection between the electronic device and an external server device and displaying an information provision state object indicating a user information transmission state. Furthermore, various embodiments of the present disclosure may provide a method for providing user information only to the authenticated CP and the electronic device supporting the same.

Furthermore, while a specific session is maintained, various embodiments of the present disclosure may provide a method for providing user information and the electronic device supporting the same.

Other aspects, advantages, and salient features of the disclosure will become apparent to those skilled in the art from the following detailed description, which, taken in conjunction with the annexed drawings, discloses various embodiments of the present disclosure.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts. The above and other aspects, features, and advantages of certain embodiments of the present disclosure will be more apparent from the following description taken in conjunction with the accompanying drawings, in which:
FIG. 1 is a diagram illustrating a user information processing device according to various embodiments of the present disclosure;
FIG. 2 is a diagram illustrating a user information processing system according to various embodiments of the present disclosure;
FIG. 3 is a diagram illustrating a user information processing system and a user information processing method according to various embodiments of the present disclosure;
FIG. 4 is a flowchart illustrating an operation method of an electronic device associated with a user information processing method, according to various embodiments of the present disclosure;
FIG. 5A is a diagram illustrating an example of a consent screen about provision of user information according to various embodiments of the present disclosure;
FIG. 5B is a diagram illustrating an example of a change screen about provision of user information provision state according to various embodiments of the present disclosure;
FIG. 5C is a diagram illustrating an example of a history screen about provision of user information according to various embodiments of the present disclosure;
FIG. 6 is a diagram illustrating an example of a personalized service using user information, according to various embodiments of the present disclosure;
FIG. 7 is a block diagram illustrating an electronic device according to various embodiments of the present disclosure;
FIG. 8 is a diagram illustrating an electronic device in a network environment, according to various embodiments of the present disclosure;
FIG. 9 illustrates a block diagram of a program module according to various embodiments of the present disclosure;
FIG. 10 is a diagram illustrating a screen related to provision of user information, according to various embodiments of the present disclosure; and
FIG. 11 is a block diagram illustrating a user information processing platform according to various embodiments of the present disclosure.

Throughout the drawings, it should be noted that like reference numbers are used to depict the same or similar elements, features, and structures.

### DETAILED DESCRIPTION OF EMBODIMENTS OF THE PRESENT INVENTION

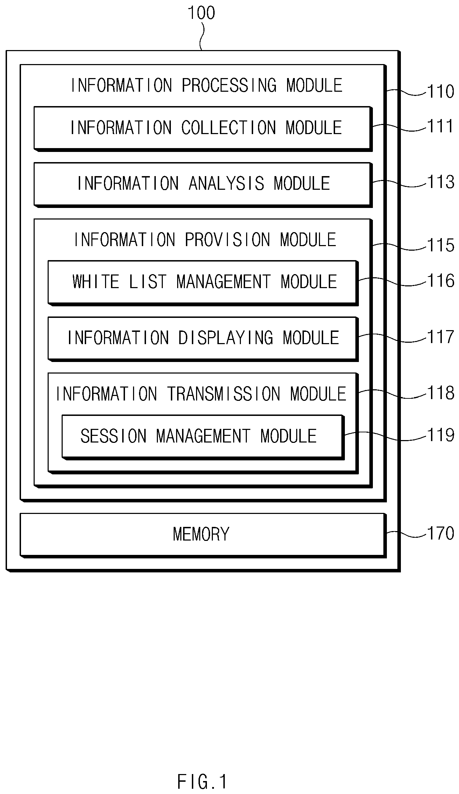

FIGURES 1 through 11, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged electronic devices. Various embodiments of the present disclosure may be described with reference to accompanying drawings. Accordingly, those of ordinary skill in the art will recognize that modification, equivalent, and/or alternative on the various embodiments described herein can be variously made without departing from the scope of the present disclosure. With regard to description of drawings, similar components may be marked by similar reference numerals.

In the disclosure disclosed herein, the expressions "have", "may have", "include" and "comprise", or "may include" and "may comprise" used herein indicate existence of corresponding features (e.g., elements such as numeric values, functions, operations, or components) but do not exclude presence of additional features.

In the disclosure disclosed herein, the expressions "A or B", "at least one of A or/and B", or "one or more of A or/and B", and the like used herein may include any and all combinations of one or more of the associated listed items. For example, the term "A or B", "at least one of A and B", or "at least one of A or B" may refer to all of the case (1) where at least one A is included, the case (2) where at least one B is included, or the case (3) where both of at least one A and at least one B are included.

The terms, such as "first", "second", and the like used herein may refer to various elements of various embodiments of the present disclosure, but do not limit the elements. For example, such terms do not limit the order and/or priority of the elements. Furthermore, such terms may be used to distinguish one element from another element. For example, "a first user device" and "a second user device" indicate different user devices. For example, without departing the scope of the present disclosure, a first element may be referred to as a second element, and similarly, a second element may be referred to as a first element.

It will be understood that when an element (e.g., a first element) is referred to as being "(operatively or communicatively) coupled with/to" or "connected to" another element (e.g., a second element), it can be directly coupled with/to or connected to the other element or an intervening element (e.g., a third element) may be present. In contrast, when an element (e.g., a first element) is referred to as being "directly coupled with/to" or "directly connected to" another element (e.g., a second element), it should be understood that there are no intervening element (e.g., a third element).

According to the situation, the expression "configured to" used herein may be used as, for example, the expression "suitable for", "having the capacity to", "designed to", "adapted to", "made to", or "capable of'. The term "configured to" must not mean only "specifically designed to" in hardware. Instead, the expression "a device configured to" may mean that the device is "capable of' operating together with another device or other components. For example, a "processor configured to perform A, B, and C" may mean a dedicated processor (e.g., an embedded processor) for performing a corresponding operation or a generic-purpose processor (e.g., a central processing unit (CPU) or an application processor) which may perform corresponding operations by executing one or more software programs which are stored in a memory device.

Terms used in this specification are used to describe specified embodiments of the present disclosure and are not intended to limit the scope of the present disclosure. The terms of a singular form may include plural forms unless otherwise specified. Unless otherwise defined herein, all the terms used herein, which include technical or scientific terms, may have the same meaning that is generally understood by a person skilled in the art. It will be further understood that terms, which are defined in a dictionary and commonly used, should also be interpreted as is customary in the relevant related art and not in an idealized or overly formal detect unless expressly so defined herein in various embodiments of the present disclosure. In some cases, even if terms are terms which are defined in the specification, they may not be interpreted to exclude embodiments of the present disclosure.

An electronic device according to various embodiments of the present disclosure may include at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, or wearable devices. A wearable device according to various embodiments of the present disclosure may include at least one of an accessory type (e.g., watch, ring, bracelet, ankle bracelet, necklace, glasses, contact lens, or head-mounted-device(HMD)), a fabric or clothing type (e.g., electronic apparel), a physical attachment type (e.g., skin pad or tattoo), or a body implantation type (e.g., implantable circuit).

According to various embodiments of the present disclosure, the electronic devices may be home appliances. The home appliances may include at least one of, for example, televisions (TVs), digital versatile disc (DVD) players, audios, refrigerators, air conditioners, cleaners, ovens, microwave ovens, washing machines, air cleaners, set-top boxes, TV boxes (e.g., Samsung HomeSyncTM, Apple TVTM, or Google TVTM), game consoles (e.g., XboxTM and PlayStationTM), electronic dictionaries, electronic keys, camcorders, electronic picture frames, and the like.

According to various embodiments of the present disclosure, the electronic devices may include at least one of medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, and ultrasonic devices) receiving a user input in an idle mode, navigation devices, global navigation satellite system (GNSS) receivers, event data recorders (EDRs), flight data recorders (FDRs), vehicle infotainment devices, electronic equipment for vessels (e.g., navigation systems and gyrocompasses), avionics, security devices, head units for vehicles, industrial or home robots, automatic teller's machines (ATMs), points of sales (POSs), or internet of things (e.g., light bulbs, various sensors, electric or gas meters, sprinkler devices, fire alarms, thermostats, street lamps, toasters, exercise equipment, hot water tanks, heaters, boilers, and the like).

According to various embodiments of the present disclosure, the electronic devices may include at least one of parts of furniture or buildings/structures, electronic boards, electronic signature receiving devices, projectors, or various measuring instruments (e.g., water meters, electricity meters, gas meters, or wave meters, and the like). The electronic devices according to various embodiments of the present disclosure may be one or more combinations of the above-mentioned devices. According to various embodiments of the present disclosure, an electronic device may be a flexible electronic device. Also, electronic devices according to various embodiments of the present disclosure are not limited to the above-mentioned devices, and may include new electronic devices according to technology development.

Hereinafter, electronic devices according to various embodiments of the present disclosure will be described with reference to the accompanying drawings. The term "user" used herein may refer to a person who uses an electronic device or may refer to a device (e.g., an artificial electronic device) that uses an electronic device.

FIG. 1 is a diagram illustrating a user information processing device according to various embodiments of the present disclosure. When providing user information to a specific CP, a user information processing device 100 may perform the following functions to secure the transparency of information which is provided and the safety of information use: processing user information, managing a white list, and managing a session.

Referring to FIG. 1, the user information processing device 100 may include an information processing module 110 and a memory 170. However, the scope of the present disclosure may not be limited thereto. According to various embodiments of the present disclosure, the user information processing device 100 may not include at least one of components illustrated in FIG. 1 or may further include at least one other component. According to an embodiment of the present disclosure, the user information processing device 100 may further include a display.

The information processing module 110 may perform the following functions: collecting, analyzing, and providing of user information. For example, the information processing module 110 may collect use history information of the user information processing device 100. The information processing module 110 may analyze a shape, a form, or a type of the use history information based on kinds of the use history information. The information processing module 110 may analyze the information and process the analyzed information for de-identification (or anonymity). Furthermore, the information processing module 110 may provide the de-identified information to the CP. With regard to the above-mentioned functions, the information processing module 110 may include an information collection module 111, an information analysis module 113, and an information provision module 115.

The information collection module 111 may collect user information. For example, the information collection module 111 may collect use history information of the user information processing device 100. The use history information may include execution information of an application program (e.g., category, execution time, or the like of an application program), browsing information (e.g., a search term, a bookmark, history information, or the like), sensor information (e.g., location information, biometric information, or the like), or the like.

According to various embodiments of the present disclosure, the information collection module 111 may collect user information from an external electronic device connected to the user information processing device 100 through wired/wireless communications. For example, the external electronic device may be an electronic device, such as a smart TV, a smartphone, a tablet personal computer (PC), a Motion Picture Experts Group (MPEG-1 or MPEG-2) Audio Layer 3 (MP3) player, a mobile medical device, a camera, a wearable device, and the like, which is registered or logged-on with user identification information. For example, the information collection module 111 may collect TV watching information (e.g., watching history information, real-time watching information, and the like) from a smart TV. Furthermore, the information collection module 111 may collect use history information of a device or health information from a wearable device. According to an embodiment of the present disclosure, the information collection module 111 may collect a variety of sensor information from an internet of things (IoT) device, such as a smart home.

According to various embodiments of the present disclosure, the information collection module 111 may store the collected user information in the memory 170 or in an external storage media connected to the user information processing device 100 through wired/wireless communications. Furthermore, the information collection module 111 may transmit user information to the information analysis module 113. The information analysis module 113 may analyze user information. The information analysis module 113 may analyze the collected user information for each kind whether to have a shape, a form, or a type. The information analysis module 113 may perform data mining in which the useful correlation between user information is found based on the analyzed result and thus valuable information is extracted. According to an embodiment of the present disclosure, the information analysis module 113 may analyze user information and may extract information, such as a life pattern (e.g., user's main activity area and time zone), interest information, a consumption pattern, or the like. Furthermore, the information analysis module 113 may extract information, such as information about an application program which a user mainly uses, TV watching information, IoT information, user's health information, or the like.

According to various embodiments of the present disclosure, the information analysis module 113 may classify information, which are extracted through a user information analysis, such as life pattern information, interest information, consumption pattern information, or the like, based on classification reference information, for example, a degree of risk, a personal closeness, a degree of immutability (e.g., information, such as a height, a weight, a marriage status, the number of children, or the like, which is not changed for a specific period of time, or consumption history information, such as a product purchasing history, a travel history, or the like, which is one-time and is cumulative). According to an embodiment of the present disclosure, the information analysis module 113 may calculate the degree of risk based on an asset value of the extracted information, the possibility that infringement factor occurs, the compliance with the law, and the like. For example, the information analysis module 113 may classify user's personal information, such as a sex, an age, a marriage status, or the like, as the highest level of risk. Furthermore, the information analysis module 113 may calculate a risk level of information, such as user's health information, a user's consumption pattern (e.g., a consumption time zone, categories of major consumption products, a consumption location, or the like), user location information (e.g., residence, company location, a favorite area, or the like), a user interest (e.g., travel, automobile, hobby, or the like), user state information (e.g., in the middle of commute, wedding preparation, travel preparation, or the like), TV watching information (e.g., watching history, real-time TV watching information, or the like), a user inclination (e.g., introverted/extroverted, passive/active, or the like), as a secondary level of risk. Alternatively, the information analysis module 113 may calculate the risk level based on the arbitrarily set sequence or the agreement with the CP. According to various embodiments of the present disclosure, the information analysis module 113 may not extract sensitive information, such as religion or political inclination, or the like, with regard to the risk of user information.

According to various embodiments of the present disclosure, the information analysis module 113 may de-identify (e.g., a process which makes it hard or impossible to identify user information) user information or the information extracted through the user information analysis. For example, the information analysis module 113 may eliminate a factor, which is able to identify a user, from the user information. According to an embodiment of the present disclosure, the information analysis module 113 may de-identify personal information, such as a resident registration number, a credit card number, a phone number, or the like, with a method, such as data masking, a data pseudonymization, data suppression, or the like. The data masking may be a method for processing the data such that a part of the data which is identifiable is invisible, and the data pseudonymization may be a method for replacing the major identification factor among personal information with data which are fully unrelated with previous data, so as not to identify an individual. Furthermore, the data suppression may convert the data value to an average value or a category value and thus may hide a specific value.

According to various embodiments of the present disclosure, the information analysis module 113 may store the information extracted through the user information analysis in the memory 170 or in an external storage media connected to the user information processing device 100 through wired/wireless communications. Furthermore, the information analysis module 113 may de-identify the user information or the extracted information and may store the de-identified information in the memory 170. The information analysis module 113 may transmit the de-identified information to the information provision module 115.

The information provision module 115 may perform a function to provide the de-identified information. For example, the information provision module 115 may transmit the de-identified information to a CP or may output the de-identified information through an output device (e.g., a display). To perform the above-mentioned functions, the information provision module 115 may include a white list management module 116, an information displaying module 117, and an information transmission module 118.

The white list management module 116 may perform a function to manage a list (or a list of external server devices, hereinafter referred to as "white list") of CPs authenticated through a CP authentication system. According to an embodiment of the present disclosure, the white list management module 116 may collect a white list from a CP authentication server periodically or in real time. For example, at a point in time of executing a specific application program or at a point in time of accessing to a specific web page, the white list management module 116 may collect a white list from a CP authentication server.

According to various embodiments of the present disclosure, in the case where a service provided from a CP which is not included in the white list is used, for example, in the case where the application program provided by the CP is executed or a web page provided by the CP is accessed, the information processing module 110 may process information such that the de-identified information is not provided to the CP. For example, the information processing module 110 may provide fragmentary user information to the CP so as to ensure a trouble-free service. However, the information processing module 110 may not provide the valuable information extracted through data mining such that the personalized service is not provided. Furthermore, the information processing module 110 may limit a use of a service provided by an unauthenticated CP, thereby preventing an indiscriminate use or a leak of user information. For example, the CPs may collect user information through the following procedure: 1) authenticating at the CP authentication system through the CP authentication server and 2) obtaining user's consent.

The information displaying module 117 may output an object associated with the provision of the de-identified information. According to an embodiment of the present disclosure, the information displaying module 117 may display on a screen a display object (hereinafter referred to as "information provision request object") which is used to confirm the consent to provision of the de-identified information requested by the CP. The information displaying module 117 may differently display the information provision request object according to classification reference information of user information. For example, the information displaying module 117 may differently display at least one of a background color of the information provision request object, a thickness/shape/color of a boundary of the information provision request object, an image or a text of the information provision request object. According to various embodiments of the present disclosure, the information displaying module 117 may display on a screen a display object (hereinafter referred to as "information provision state change object") which is used to select whether to provide the de-identified information. Furthermore, at point in time of transmitting the de-identified information, the information displaying module 117 may display on a specific area of a screen a display object (hereinafter referred to as "information provision state object") (e.g., an indicator bar) which indicates a user information provision state, in real time. The information displaying module 117 may differently display the information provision state object based on the user information transmission state or classification reference information of user information. According to various embodiments of the present disclosure, the information displaying module 117 may display on a screen a display object (hereinafter referred to as "information provision history object") which includes information about information provision history, such as a time when the de-identified information is provided, information about a CP which is provided with information, or the like.

According to various embodiments of the present disclosure, when the display object (e.g., the information provision request object, the information provision state change object, the information provision state object, or the information provision history object) is displayed on a screen, the information displaying module 117 may output voice information which notifies an output of a screen about the display object. For example, when the de-identified information is being transmitted, the information displaying module 117 may output the corresponding display object (e.g., the information provision state object) on a screen and may simultaneously output the voice information for notifying the transmission of the de-identified information. Furthermore, while outputting the voice information which notifies an information provision consent confirmation request or a change of the information provision state, the information displaying module 117 may output the related display object (e.g., the information provision request object or the information provision state change object) on the screen.

The information transmission module 118 may transmit the information, which is requested by the CP, among the de-identified information to a server device which the CP operates. According to an embodiment of the present disclosure, the information transmission module 118 may be connected to the CP through a service provided by the CP, for example, an interface such as an application program, a service, a web page, or the like. The information transmission module 118 may determine whether to provide the de-identified information based on a state of the service. The state of the service may indicate whether a service is executed, whether a service is activated, or the like. For example, in the case where the service is in an active state, that is, the service is executed in foreground, the information transmission module 118 may provide the de-identified information to the CP. Alternatively, in the case where a CP which provides the service has a request right even though the service is executed in background, the information transmission module 118 may provide the de-identified information during a specific period of time. The information transmission module 118 may include a session management module 119.

The session management module 119 may manage the connection between the user information processing device 100 and a CP operation server. For example, the session management module 119 may manage a session connection for providing the de-identified information through a specific session protocol. According to an embodiment of the present disclosure, in the case where a CP is confirmed as an authenticated CP included in the white list at a point in time of using a service provided by the CP, a session with a server which the CP operates may be generated under control of the session management module 119. The session may be a logical connection for communications between electronic devices in a network environment, and the session protocol may be a communication protocol between electronic devices connected through a session.

According to various embodiments of the present disclosure, the session management module 119 may control a state of a session based on a state of a service provided by the CP. For example, in the case where the service is executed in foreground, the session management module 119 may activate the state of the session and may process to transmit the de-identified information. Furthermore, in the case where the service is switched to background, the session management module 119 may deactivate the state of the session. In this case, the session management module 119 may stop the session at a point in time when a specific time elapses. According to an embodiment of the present disclosure, in the case where the CP requests the de-identified information in the inactive state of the session, the session management module 119 may determine whether the CP has a request right. In this case, the session management module 119 may allow the de-identified information to be transmitted only during a specific period of time. According to various embodiments of the present disclosure, in the case where the information processing module 110 transmits the de-identified information to the CP, the session management module 119 may process to encrypt the information. According to various embodiments of the present disclosure, in the case where a specific period of time elapses in an inactive state of a session or in the case where a service provided by the CP is ended, the session management module 119 may end the corresponding session. For example, the session management module 119 may request the CP to delete the de-identified information provided to a CP operation server. In this case, the CP may delete the de-identified information according to the deletion request, thereby preventing the de-identified information from being stored in the CP operation server.

The memory 170 may store at least one of information: user information collected by the information processing module 110, information extracted through the analysis of user information, or information which is obtained through the de-identification of the user information or the extracted information. Furthermore, the memory 170 may store a white list.

As described above, according to various embodiments of the present disclosure, an user information processing device may include an information processing module configured to control a display of an information provision state object corresponding to a user information transmission state transmitted to an external server device and a display configured to output the information provision state object.

According to various embodiments of the present disclosure, the information processing module may perform control to display the information provision state object to be different according to classification reference information of the user information.

According to various embodiments of the present disclosure, the information processing module may perform control to display an information provision state change object, which makes it possible to select whether to transmit the user information, in response to a selection of the information provision state object. According to various embodiments of the present disclosure, in the case where a service provided by the external server device is used for the first time or a user information-associated policy is changed, the information processing module may perform control to display an information provision request object which makes it possible to select whether to consent to a provision of the user information.

According to various embodiments of the present disclosure, the information processing module may perform control to differently display at least one of a background color of the information provision request object, a thickness/shape/color of the boundary of the information provision request object, an image or a text of the information provision request object, may perform control to differently display at least one of a display location, a display time, or a display speed of the information provision request object, or may perform control to differently display at least one of a flickering speed, a flickering duration, or a light emitting color of a flickering device attached to an information processing device at a point in time when the information provision request object is displayed, based on classification reference information of the user information.

According to various embodiments of the present disclosure, at a point in time when a session with the external server device is connected, at a point in time when a session connected with the external server device is ended, or at a point in time when an object making possible to display an information provision history is selected in the state where the session connected with the external server is being connected, the information processing module may perform control to display an information provision history object which includes a provision history of the user information. According to various embodiments of the present disclosure, the information processing module may perform control to transmit the user information while a session with the external server device is being connected.

According to various embodiments of the present disclosure, in the case where the session is ended, the information processing module may request the external server device to delete the user information transmitted.

According to various embodiments of the present disclosure, the user information processing device may further include a memory configured to store a list of external server devices designated to provide the user information.

According to various embodiments of the present disclosure, the memory may store a user information-associated policy of the external server device together with identification information of the external server device.

Furthermore, according to various embodiments of the present disclosure, the user information processing device may include a communication interface which supports a session connection with an external server device and an information processing module which controls transmission of the user information while the session with the external server device is being connected.

According to various embodiments of the present disclosure, in the case where the session is ended, the information processing module may request the external server device to delete the transmitted user information.

Furthermore, according to various embodiments of the present disclosure, the user information processing device may include a memory in which a white list is stored and an information processing module which controls the transmission of user information to an external server device based on whether identification information of the external server device is included in the white list, if a session with the specific external server device is connected.

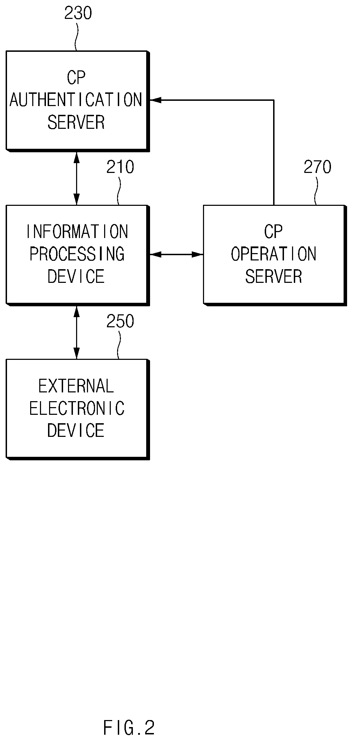

FIG. 2 is a diagram illustrating a user information processing system according to various embodiments of the present disclosure. Below, a description which is the same as, similar to, or corresponding to the above-mentioned description is omitted.

Referring to FIG. 2, a user information processing system may include an information processing device 210, a CP authentication server 230, an external electronic device 250, and a CP operation server 270.

The information processing device 210 may have a configuration which is the same as or similar to that of the user information processing device 100 of FIG. 1. The information processing device 210 may collect use history information of the information processing device 210. Furthermore, the information processing device 210 may collect use history information from the external electronic device 250 which is registered or logged on with user identification information or from an external electronic device connected to the external electronic device 250. The information processing device 210 may perform data mining, in which the useful correlation between user information is found based on the analyzed result and thus valuable information is extracted. Furthermore, the information processing device 210 may convert the information to a more secure form of information through the de-identification of the information.

According to various embodiments of the present disclosure, the information processing device 210 may collect a white list which is a list of CPs authenticated by the CP authentication server 230. In this case, the information processing device 210 may process to provide user information only to the CPs included in the white list. According to various embodiments of the present disclosure, the information processing device 210 may collect and update a white list from the CP authentication server 230 periodically or in real time.

According to various embodiments of the present disclosure, the information processing device 210 may be connected to the CP operation server 270 based on a service provided by a CP. In this case, in the case where the CP is included in a white list, the information processing device 210 may connect a session for transmitting information through a specific session protocol. The information processing device 210 may determine whether to transmit user information based on a state of the session. Furthermore, in the case where the session is ended, the information processing device 210 may request the CP operation server 270 to delete the transmitted user information. The CP authentication server 230 may perform a function to authenticate a CP. For example, the CP authentication server 230 may receive a CP registration request from a CP, may review user information-associated policy (e.g., a kind or a use purpose of information which the CP intends to collect, an offering benefit, or the like) and a service provided by the CP, and may register the CP into a CP authentication system. Furthermore, the CP authentication server 230 may determine contents, quality, or the like of the service of the registered CPs through review or inspection and may perform the following: registering or re-registering corresponding CPs in the CP authentication system or removing corresponding CPs from the CP authentication system. With the above description, the information processing device 210 may collect a list (a white list) of CPs registered in the CP authentication system and may provide the corresponding information only to the authenticated CPs.

The external electronic device 250 may be a device which is connected to the information processing device 210 with wired/wireless communications or is registered or logged on with user identification information. The external electronic device according to various embodiments of the present disclosure may include at least one of smartphones, tablet personal computers (PCs), mobile phones, video telephones, electronic book readers, desktop PCs, laptop PCs, netbook computers, workstations, servers, personal digital assistants (PDAs), portable multimedia players (PMPs), Motion Picture Experts Group (MPEG-1 or MPEG-2) Audio Layer 3 (MP3) players, mobile medical devices, cameras, wearable devices (e.g., smart glasses, head-mounted-devices (HMDs), or the like), electronic apparels, electronic bracelets, electronic necklaces, electronic appcessories, electronic tattoos, smart mirrors, smart watches, or the like.

According to an embodiment of the present disclosure, the external electronic device 250 may be smart home appliances. The smart home appliances may include at least one of, for example, televisions (TVs), digital versatile disc (DVD) players, audios, refrigerators, air conditioners, cleaners, ovens, microwave ovens, washing machines, air cleaners, set-top boxes, home automation control panels, security control panels, TV boxes (e.g., Samsung HomeSyncTM, Apple TVTM, or Google TVTM), game consoles (e.g., XboxTM and PlayStationTM), electronic dictionaries, electronic keys, camcorders, electronic picture frames, or the like.

According to various embodiments of the present disclosure, the external electronic device 250 may include at least one of medical devices (e.g., various portable medical measurement devices (e.g., a blood glucose monitoring device, a heartbeat measuring device, a blood pressure measuring device, a body temperature measuring device, and the like), a magnetic resonance angiography (MRA), a magnetic resonance imaging (MRI), a computed tomography (CT), scanners, ultrasonic devices, or the like), navigation devices, global positioning system (GPS) receivers, event data recorders (EDRs), flight data recorders (FDRs), vehicle infotainment devices, electronic equipment for vessels (e.g., navigation systems, gyrocompasses, and the like), avionics, security devices, head units for vehicles, industrial or home robots, automatic teller's machines (ATMs), points of sales (POSs), or internet of things (e.g., light bulbs, various sensors, electric or gas meters, sprinkler devices, fire alarms, thermostats, street lamps, toasters, exercise equipment, hot water tanks, heaters, boilers, and the like). According to an embodiment of the present disclosure, the external electronic device 250 may include at least one of furniture or buildings/structures, electronic boards, electronic signature receiving devices, projectors, or various measuring instruments (e.g., water meters, electricity meters, gas meters, or wave meters, and the like). According to various embodiments of the present disclosure, the external electronic device 250 may be one or more combinations of the above-mentioned various devices. The external electronic device 250 according to an embodiment of the present disclosure may be a flexible electronic device. Also, the external electronic device 250 according to an embodiment of the present disclosure may include the above-mentioned devices. However, the scope of the present disclosure may not be limited thereto. For example, the external electronic device 250 may include new electronic device(s) in accordance with technology development.

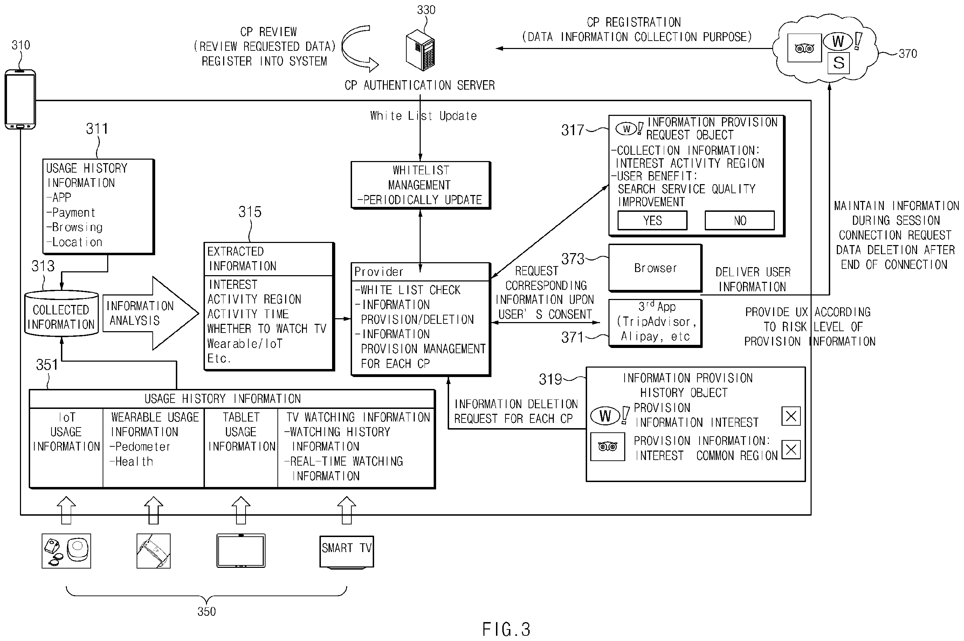

FIG. 3 is a diagram illustrating a user information processing system and a user information processing method according to various embodiments of the present disclosure.

Referring to FIG. 3, in the case where a service provided by a CP is used, for example, in the case where an application program 371 provided by the CP is executed or a web page 373 provided by the CP is accessed, an information processing device 310 may confirm whether the CP is an authenticated CP. According to various embodiments of the present disclosure, the information processing device 310 may collect a white list from a CP authentication server 330 and may confirm whether the CP is included in the white list.

In this regard, the CP may request a registration to the CP authentication server 330 and then may be authenticated. For example, the CP may transmit a user information-associated policy (e.g., a kind or a use purpose of information to collect, an offering benefit, or the like) to the CP authentication server 330. The CP authentication server 330 may examine the corresponding information and may register the CP into a CP authentication system with information about the CP. According to an embodiment of the present disclosure, the CP authentication server 330 may store and manage a list of the authenticated CPs as a white list.

In the case where the CP is an authenticated CP, the information processing device 310 may connect a session to a corresponding CP operation server 370. In this case, in the case where the session is activated or in the case where the CP has a request right even though the session is inactivated, the information processing device 310 may transmit information requested by the CP to the CP operation server 370. Furthermore, in the case where the session is ended, the information processing device 310 may request the CP operation server 370 to delete the transmitted information.

According to various embodiments of the present disclosure, the information processing device 310 may collect at least one of usage history information 311 of the information processing device 310 or usage history information 351 of an external electronic device 350. Furthermore, the information processing device 310 may perform data mining using the valuable information obtained by analyzing the collected information 313. The information processing device 310 may de-identify the collected information 313 or extracted information 315 and thus may reduce the possibility of leak of personal information. According to various embodiments of the present disclosure, the usage history information 311 of the information processing device 310, the usage history information 351 of the external electronic device 350, and the extracted information 315 may not be limited to items illustrated in FIG. 3, and a variety of information which has a meaning as user information may be included therein.

According to various embodiments of the present disclosure, the information processing device 310 may output a display object (e.g., an information provision state change object (not shown)) which allows a user to confirm or select a user information-associated policy (e.g., a provision time, a kind, a use purpose, or a degree of risk of the information being transmitted or information about the CP to which information is provided) with regard to provision of user information. According to an embodiment of the present disclosure, in the case where the service provided by a CP is used for the first time, the information processing device 310 may output a display object (e.g., an information provision request object 317), which requests an information provision consent, on a screen. The information provision request object 317 may differently display an image or a text, corresponding to information such as a kind and a use purpose of information to collect, an offering benefit or the like, together with information about the CP, based on a risk level of information.

According to various embodiments of the present disclosure, at a point in time when user information is provided, the information processing device 310 may output an object (e.g., an information provision state object (not shown)) which displays a user information provision state. The information processing device 310 may differently display the information provision state object based on a user information transmission state or classification reference information of user information.

According to various embodiments of the present disclosure, the information processing device 310 may display on a screen a display object (e.g., an information provision history object 319) which includes history information, such as a time when user information is provided, information about a CP which receives information, or the like. For example, the information processing device 310 may output the following on the screen: information about CPs included in the white list, a time when user information is provided to each of CPs, a kind of user information provided to each of CPs, or the like. The information processing device 310 may classify the information provision history object 319 for each transmitted date, each transmitted time, or each CP and may display the classified result on the screen. The information provision history object 319 may include a kind of user information, information about classification reference information, provision purpose, service utilization, or the like, and history information about the information transmitted during a specific period of time.

The CP operation server 370 may be a server device which performs an operation to provide various information to a user through a service, for example, the application program 371 or the web page 373, or the like, provided by a CP. For example, the CP operation server 370 may be a server device which a CP operates. The server device provides a search of various information, an advertisement of a specific merchandise, a supplementary service (e.g., a game, a music, or a chatting), or the like. To provide a variety of services, the CP operation server 370 may be connected to an external server device or an external storage media and may collect information therefrom. Furthermore, the CP operation server 370 may request a CP registration to the CP authentication server 330 to register into the CP authentication system, thereby collecting user information from the information processing device 310.

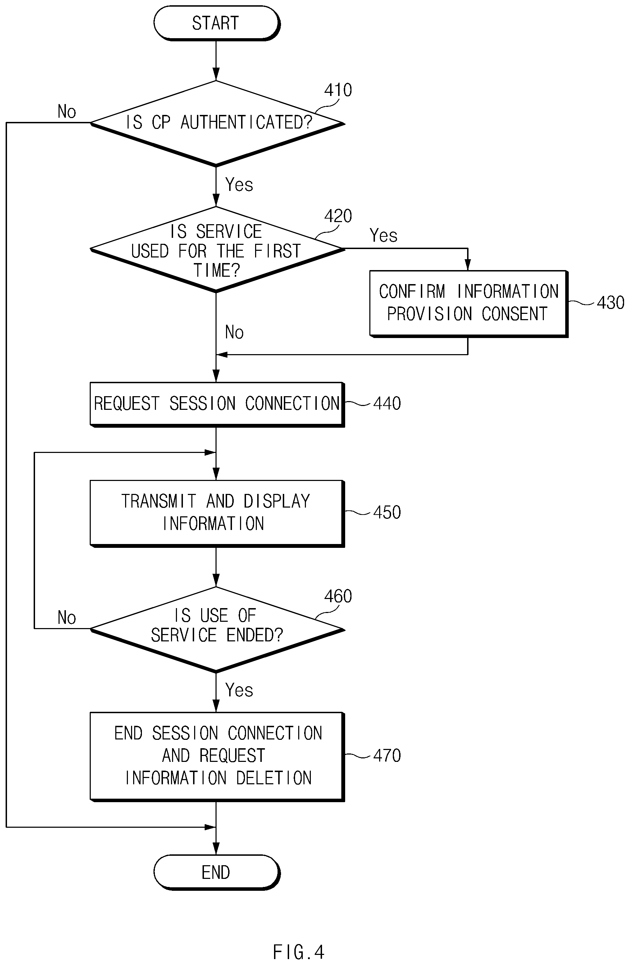

FIG. 4 is a flowchart illustrating an operation method of an electronic device associated with a user information processing method, according to various embodiments of the present disclosure.

Referring to FIG. 4, in the case where a service provided by a CP is used, in operation 410, an information processing device (e.g., the information processing device 210 in FIG. 2) may determine whether the CP is the authenticated CP. For example, the information processing device may collect a list of the CPs authenticated by a CP authentication server (e.g., the CP authentication server 230 in FIG. 2), that is, a white list, and may determine whether the CP is included in the white list.

In the case where the CP is not included in the white list, the information processing device may not provide any information to the CP which is not authenticated. Alternatively, in the case where the CP is not included in the white list, the information processing device may skip operations which will be explained later and may provide fragmentary user information (e.g., a portion of use history information of the information processing device) to the CP. In this case, a CP may use a corresponding service based on the fragmentary user information from the information processing device. However, since the information processing device does not provide the CP with valuable information (e.g., data mining in which meaningful data is obtained by rearranging, grouping, or enumerating the information with reference to a specific category, a classification reference, reference information, or the like), the CP may not provide a more diverse and convenient personalized service.

In the case where the CP is the authenticated CP, in operation 420, the information processing device may determine whether the service is used for the first time. In the case where the service is used for the first time, in operation 430, the information processing device may confirm the consent about provision of user information to the CP. For example, the information processing device may configure a display object, which includes user information-associated policy, for example, information about a kind or a use purpose of user information requested by the CP, an offering benefit, or the like, together with a button for selecting whether to consent to provision of user information and may display the display object thus configured on the screen.

According to various embodiments of the present disclosure, in the case where the user information-associated policy, for example, information about a kind or a use purpose of user information requested by the CP, an offering benefit, or the like, is changed since contents of service of the CP is changed, the CP may re-register the corresponding information to the CP authentication system through the CP authentication server. In this case, the information processing device may confirm consent to provision of user information to the CP with regard to information which is the same as or similar to that of operation 430.

According to various embodiments of the present disclosure, in the case where there is no consent to provision of user information to the CP or in the case where the user information provision state is set to a refusal state in advance, the information processing device may process not to transmit user information to the CP. Alternatively, the information processing device may provide fragmentary user information (e.g., a portion of the use history information of the information processing device) to the CP such that there is no issue in using the service. According to an embodiment of the present disclosure, the information processing device may provide a user with an object, which makes it possible to change the information provision state, such as a pop-up, and the like.

In the case where the service provided by the CP is not used for the first time or in the case where the consent to provision of user information is confirmed, in operation 440, the information processing device may request a session connection to a CP operation server (e.g., the CP operation server 270 in FIG. 2). The session may be a logical connection defined by a specific session protocol. The information processing device and the CP operation server may exchange the information, encrypted in a specific way, through the session and may determine whether to transmit information, based on a state of the session.

In operation 450, the information processing device may transmit user information requested by the CP and may display the user information being transmitted. According to an embodiment of the present disclosure, the information processing device may determine whether to transmit information, based on a state of the service. For example, in the case where the service is executed in an active state, that is, in foreground, the information processing device may transmit the user information to the CP operation server. Alternatively, in the case where the CP has a request right even though the service is executed in background, the information processing device may transmit the user information to the CP operation server during a specific period of time.

According to various embodiments of the present disclosure, at a point in time when user information is transmitted, the information processing device may output an object which displays a user information provision state. For example, the information processing device may display an object corresponding to a user information transmission state, classification reference information of user information being transmitted, or the like.

In operation 460, the information processing device may confirm whether the use of the service is ended. In the case where the use of the service is not ended, the information processing device may execute the corresponding function based on the execution routine of the service and may iteratively perform operation 450. For example, while the session is connected, the information processing device may transmit user information to the CP operation server and may display information related to user information being transmitted.

In the case where the use of the service is ended, in operation 470, the information processing device may end the session connection and may request the CP operation server to delete the transmitted user information. In this case, the CP operation server may delete the user information according to the corresponding request. Furthermore, the CP operation server may transmit notification, indicating that the user information is deleted, to the information processing device.

As described above, according to various embodiments of the present disclosure, a processing user information method in an electronic device may include controlling a display of an information provision state object corresponding to a user information transmission state transmitted to an external server device and outputting the information provision state object.

According to various embodiments of the present disclosure, the controlling of the display of the information provision state object may include controlling to display the information provision state object to be different according to classification reference information of the user information.

According to various embodiments of the present disclosure, the controlling of the display of the information provision state object may further include performing control to display an information provision state change object which makes it possible to select whether to transmit the user information corresponding to a selection of the information provision state object.

According to various embodiments of the present disclosure, the controlling of the display of the information provision state object may further include performing control to display an information provision request object which makes it possible to select whether to consent to a provision of the user information, in the case where a service provided by the external server device is used for the first time or a user information-associated policy is changed.

According to various embodiments of the present disclosure, the performing of the control to display the information provision request object may further include at least one of performing control to differently display at least one of a background color of the information provision request object, a thickness/shape/color of the boundary of the information provision request object, an image or a text of the information provision request object, performing control to differently display at least one of a display location, a display time, or a display speed of the information provision request object, and performing control to differently display at least one of a flickering speed, a flickering duration, or a light emitting color of a flickering device attached to an information processing device at a point in time when the information provision request object is displayed, based on classification reference information of the user information.

According to various embodiments of the present disclosure, wherein the controlling of the display of the information provision state object may further include performing control to display an information provision history object which includes a provision history of the user information at a point in time when a session with the external server device is connected, at a point in time when a session connected with the external server device is ended, or at a point in time when an object making possible to display an information provision history is selected in the state where the session connected with the external server is being connected.

According to various embodiments of the present disclosure, the processing user information method may further include performing control to transmit the user information while a session with the external server device is being connected.

According to various embodiments of the present disclosure, the performing of the control to transmit the user information may further include requesting the external server device to delete the user information transmitted in the case where the session is ended.

According to various embodiments of the present disclosure, the processing user information method may further include storing a list of the external server devices designated to provide the user information.

According to various embodiments of the present disclosure, the storing of the list of the external server devices may further include storing a user information-associated policy of the external server device and identification information of the external server device.

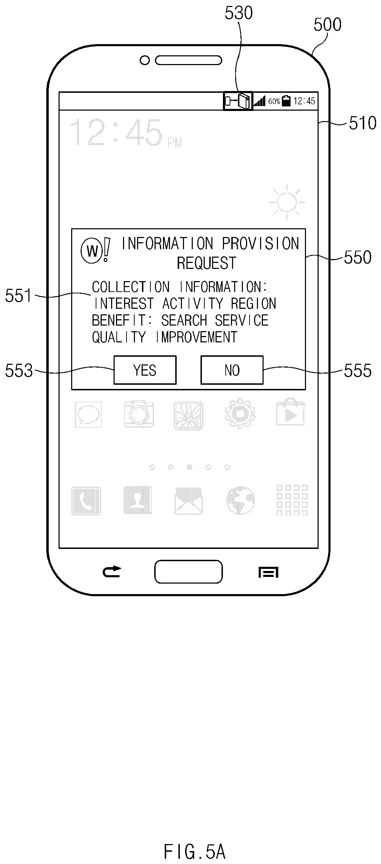

FIG. 5A is a diagram illustrating an example of a consent screen about provision of user information according to various embodiments of the present disclosure. In the case where a service provided by a CP is used for the first time, for example, in the case where an application program provided by the CP is executed for the first time or a web page provided by the CP is accessed for the first time, an information processing device 500 may output an object (e.g., an information provision request object 550) for confirming and selecting whether to consent to provision of user information to the CP. Referring to FIG. 5A, the information processing device 500 may display the information provision request object 550 on a specific area of a screen 510. The information provision request object 550 may include an image or a text 551 corresponding to information about a kind or a use purpose of user information requested by the CP, an offering benefit, or the like. Furthermore, the information provision request object 550 may include an information provision consent button 553 and an information provision refusal button 555.

In the case where the information provision consent button 553 is selected, the information processing device 500 may transmit user information requested by the CP through a specific session protocol. In this case, the information processing device 500 may stop outputting the information provision request object 550 and may output the corresponding objects based on an execution routine of the service, on the screen 510. Furthermore, the information processing device 500 may store a kind of the user information requested by the CP so as to be connected with or included in the white list for each CP.

In the case where the information provision refusal button 555 is selected, the information processing device 500 may process so as not to provide user information requested by the CP. Furthermore, the information processing device 500 may provide fragmentary user information such that the service is normally executed.

According to various embodiments of the present disclosure, the information processing device 500 may additionally configure a button or a check box in the information provision request object 550 such that a user is able to select user information what he/she wants to provide. Furthermore, the information processing device 500 may differently output at least one of a background color of the information provision request object 550, a thickness/shape/color of the boundary of the information provision request object 550, or an image or a text of the object 551, based on the risk level of user information to be provided. According to an embodiment of the present disclosure, as the risk level of user information becomes higher (e.g., as the asset value of user information becomes high, as the possibility of the infringement becomes higher, or as it is the mandatory provided in the legislation), the information processing device 500 may display the background color and the boundary color of the information provision request object 550, or a text color of the object 551 with a darker color or may display the object 551 larger. For example, as the risk level becomes higher, the information processing device 500 may output the corresponding color with a color close to a dark red color or may output the object 551 larger; as the risk level becomes lower, the information processing device 500 may output the corresponding color with a color close to a light green color or may output the object 551 smaller.

According to various embodiments of the present disclosure, the information processing device 500 may differently display a display location, a display time, a display speed, or the like of the information provision request object 550 based on classification reference information of user information so as to give an animation effect. Furthermore, the information provision request object 550 may be displayed while a flickering speed, a flickering duration, an emission color, or the like of a flickering device (e.g., an LED or the like located at a bezel area of the information processing device 500) of the information processing device 500 varies under control of the information processing device 500.

According to various embodiments of the present disclosure, the information processing device 500 may display an information provision state object 530 which indicates a user information provision state on a specific area (e.g., an indicator area, an edge area (a boundary area of the screen 510), or the like) of the screen 510. Alternatively, in the case where there is no space to display the information provision state object 530 on the screen of the information processing device 500 and a connected electronic device (e.g., a wearable device) includes a screen, the information provision state object 530 may be displayed on the screen of the connected electronic device. According to an embodiment of the present disclosure, the information processing device 500 may differently display an image of the information provision state object 530 based on a user information transmission state. For example, in the case of not transmitting user information to a CP, the information processing device 500 may display the information provision state object 530 with a specific image. While the user information is being transmitted to the CP, the information processing device 500 may display the information provision state object 530 such that an image flickers by changing the image into different images in a specific interval. Furthermore, the information processing device 500 may change a kind of an image, a brightness, a shape, a transparency, or the like of the information provision state object 530 based on the risk level of user information being transmitted and may display the changed object. According to various embodiments of the present disclosure, in the case where a service provided by the CP is used for the first time or even after the first use of the service, the information processing device 500 may change the corresponding state through an object (e.g., the information provision state change object) for changing the user information provision state even though the provision of user information to the CP is refused. In this regard, an object which makes it possible to change a user information provision state will be explained later.

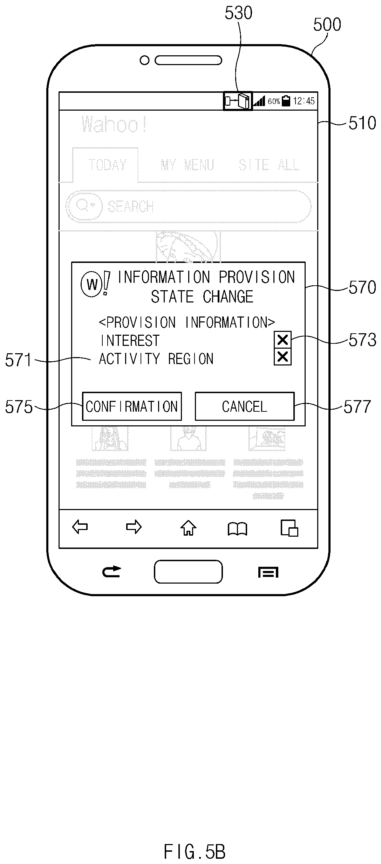

FIG. 5B is a diagram illustrating an example of a change screen about provision of user information provision state according to various embodiments of the present disclosure. Referring to FIG. 5B, the information processing device 500 may output the corresponding objects based on an execution routine of a service provided by a CP, on the screen 510. In this case, the information processing device 500 may display an information provision state change object 570 on the screen 510 at a specific time. The specific time may include a time in point when the first screen (a home screen) of the service is outputted or a time in point when user information is transmitted to the CP. The information provision state change object 570 may include an image or a text 571 which is corresponding to information about a kind or a use purpose of user information requested by the CP, an offering benefit, or the like or may include a button or a check box 573 which makes it possible to select user information to be transmitted. Furthermore, the information provision state change object 570 may include an information change confirmation button 575 and an information change cancel button 577.

In the case where the information change confirmation button 575 is selected, the information processing device 500 may stop outputting the screen about the information provision state change object 570 and may process to transmit only the selected user information to the CP. Furthermore, the information processing device 500 may store a kind of the selected user information so as to be connected with or included in the white list for each CP. Alternatively, in the case where the information change cancel button 577 is selected, the information processing device 500 may stop outputting the screen about the information provision state change object 570 and may process to transmit user information previously selected to the CP.

According to various embodiments of the present disclosure, the information processing device 500 may output the information provision state change object 570 on a specific area of the screen 510 in response to a selection of the information provision state object 530. Furthermore, the information processing device 500 may differently output a text color of the object 571 or a kind of an image (e.g., a background image, an icon, or the like) of the object 571 based on the risk level of selected user information. According to various embodiments of the present disclosure, the information processing device 500 may generate a vibration in outputting the information provision state change object 570 or may output voice information related to the information provision state change.

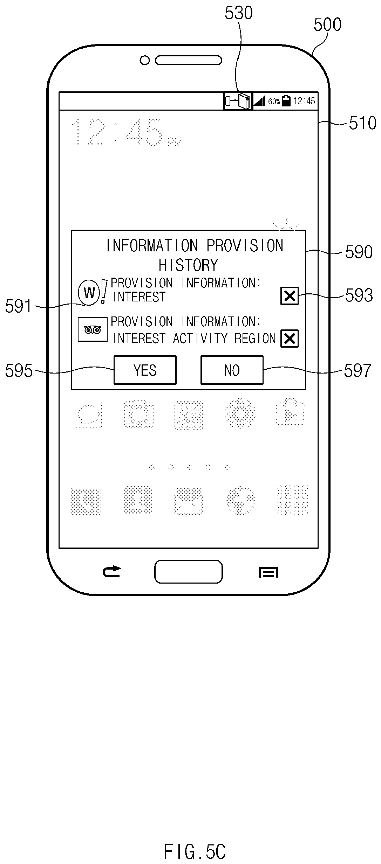

FIG. 5C is a diagram illustrating an example of a history screen about provision of user information according to various embodiments of the present disclosure.

Referring to FIG. 5C, the information processing device 500 may display an information provision history object 590 associated with the history of the provided information, on the screen 510. The information provision history object 590 may include an image or a text 591 which includes information about the CP or user information provided for each CP and may include a button or a check box 593 which makes it possible to select whether to continuously provide user information provided for each CP. Furthermore, the information provision history object 590 may include an information provision history confirmation button 595 and an information provision history cancel button 597.

In the case where the information provision history confirmation button 595 is selected, the information processing device 500 may stop outputting a screen about the information provision history object 590, may make a kind of user information to be provided for each CP to be associated with or included in the white list based on the selection of the object 593, and may store information thus obtained. Furthermore, in the case where the information provision history cancel button 597 is selected, the information processing device 500 may stop outputting a screen about the information provision history object 590.

According to various embodiments of the present disclosure, if the information provision state object 530 is selected in the state where a CP which has a connected session does not exist or in the state where a session connected to a CP is in an inactive state, the information processing device 500 may perform control to output the information provision history object 590 on the screen 510. Alternatively, in the case where a button object included in the menu screen is selected, the information processing device 500 may output the information provision history object 590.

According to various embodiments of the present disclosure, at a point in time when a session with the CP is connected, at a point in time when a session connected with the CP is ended, at a point in time when object (e.g., a button object which is configured to display the information provision history and which is included in the menu screen of the electronic device, or the like) making possible to display the information provision history is selected in the state where the session with the CP is being connected, or the like, the information processing device 500 may perform control to display the information provision history object 590.

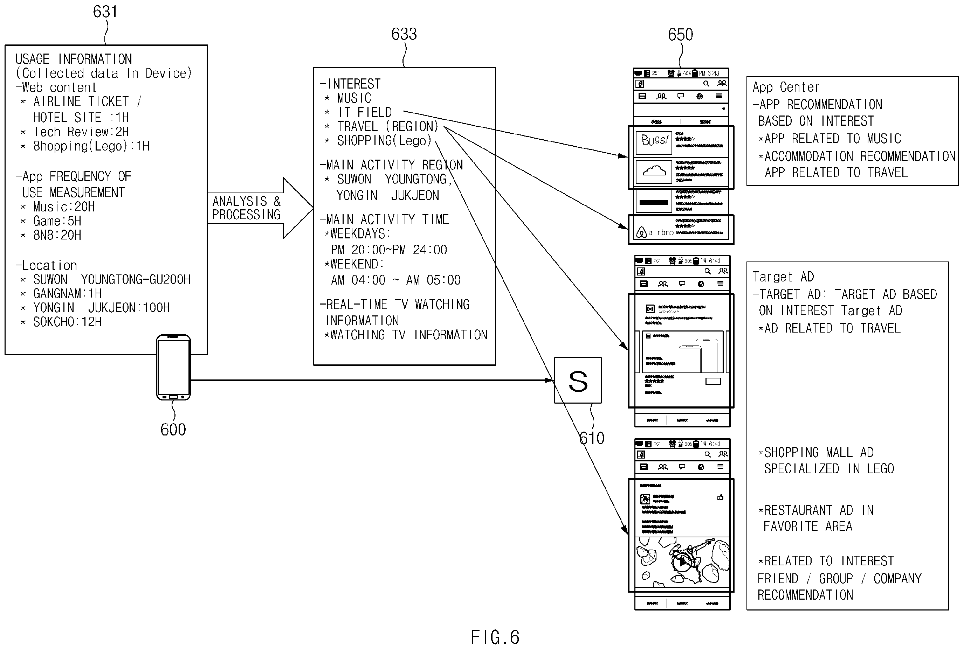

FIG. 6 is a diagram illustrating an example of a personalized service using user information, according to various embodiments of the present disclosure.

Referring to FIG. 6, an information processing device 600 may transmit user information to an authenticated CP 610 based on a specific session protocol. For example, the information processing device 600 may provide use history information about the information processing device 600 or usage history information 631 collected from an external electronic device connected to the information processing device 600 with wired/wireless communications to the authenticated CP 610. Alternatively, instead of providing the usage history information 631, the information processing device 600 may provide information 633 which is obtained by analyzing the usage history information 631 and processing (or extracting (e.g., performing data mining)) the analyzed result to be more valuable.

In this regard, the usage history information 631 may include execution information of an application program, browsing information, sensor information, or the like included in the information processing device 600 and may include a use history information, for example, use history information of IoT, use history information of a wearable device, health information, TV watching information, or the like about an external electronic device connected to the information processing device 600 with wired/wireless communications. Furthermore, the processed (or extracted) information 633 which is obtained through data mining of the usage history information 631 may include information, for example, a consumption pattern and an interest of a user, a life pattern, such as main activity area and time zone of the user, real-time TV watching information, or the like.

According to various embodiments of the present disclosure, by providing the processed (or extracted) information 633 to the authenticated CP 610, the information processing device 600 may be able to receive a personalized service from the authenticated CP 610 so as to allow for a user to easily access specific (or personalized) information. According to an embodiment of the present disclosure, the information processing device 600 may select and configure a screen 650 of the service provided by the authenticated CP 610 based on the personalized information and may display the configured screen. For example, in the case where the search service is provided from the authenticated CP 610, the information processing device 600 may display, at the top, information which is related to the corresponding information from among the results retrieved based on information about the main activity area of a user, information about interests, information about real-time TV watching, or the like. Furthermore, the information processing device 600 may recommend an application program, a restaurant, or other user who has the similar interest, based on user interest. Alternatively, the information processing device 600 may display an advertisement about a specific merchandize with a shape or a background color which the user prefers on the screen 650 so as to induce the purchase of the merchandize. In addition, the information processing device 600 may receive the personalized service from an authenticated CP 610 in a variety of ways.

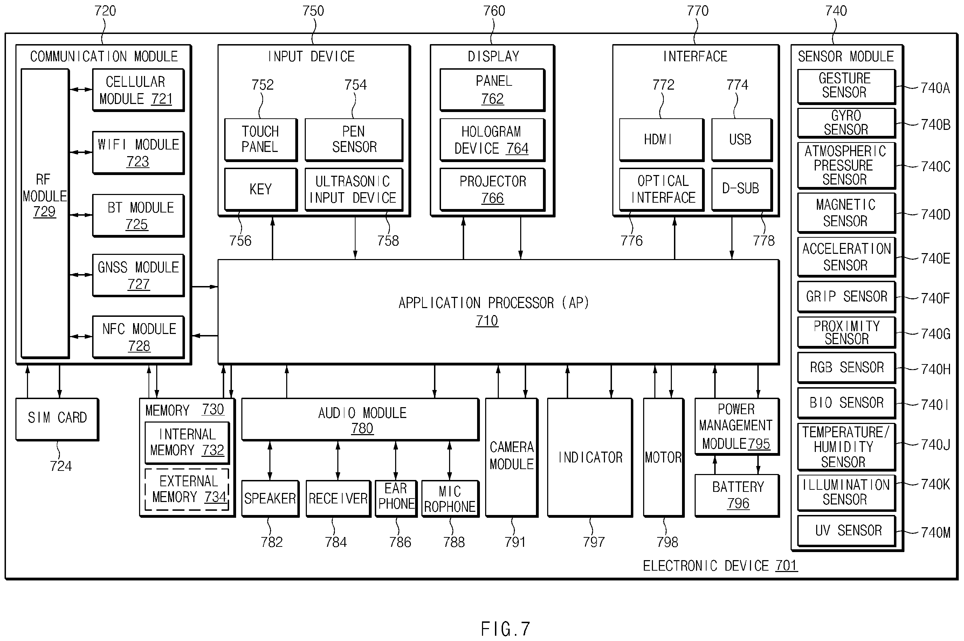

FIG. 7 is a block diagram illustrating an electronic device according to various embodiments of the present disclosure.

Referring to FIG. 7, an electronic device 701 may include, for example, all or a part of an electronic device 100 illustrated in FIG. 1. The electronic device 701 may include one or more processors (e.g., an application processor (AP)) 710, a communication module 720, a subscriber identification module 724, a memory 730, a sensor module 740, an input device 750, a display 760, an interface 770, an audio module 780, a camera module 791, a power management module 795, a battery 796, an indicator 797, and a motor 798.

The processor 710 may drive an operating system (OS) or an application to control a plurality of hardware or software components connected to the processor 710 and may process and compute a variety of data. The processor 710 may be implemented with a System on Chip (SoC), for example. According to an embodiment of the present disclosure, the processor 710 may further include a graphic processing unit (GPU) and/or an image signal processor. The processor 710 may include at least a part (e.g., a cellular module 721) of components. The processor 710 may load and process an instruction or data, which is received from at least one of other components (e.g., a nonvolatile memory), and may store a variety of data at a nonvolatile memory.

According to various embodiments of the present disclosure, the processor 710 may perform the operations which are the same as or similar to those of the information processing module 110. For example, the processor 710 may perform functions, such as a collection, an analysis, and a provision of user information.

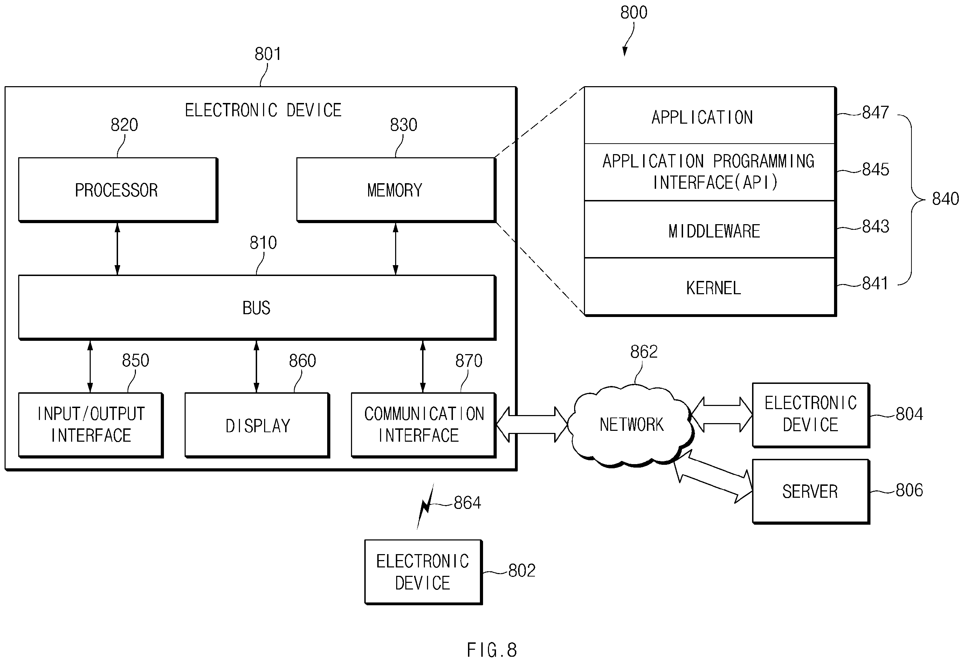

The communication module 720 may be configured the same as or similar to a communication interface 870 of FIG. 8, which will be explained later. The communication module 720 may include a cellular module 721, a wireless-fidelity (Wi-Fi) module 723, a Bluetooth (BT) module 725, a GNSS module 727 (e.g., global positioning system (GPS) module, a Glonass module, Beidou module, or a Galileo module), a near field communication (NFC) module 728, and a radio frequency (RF) module 729.

The cellular module 721 may provide voice communication, video communication, a character service, an Internet service or the like through a communication network. According to an embodiment of the present disclosure, the cellular module 721 may perform discrimination and authentication of an electronic device 701 within a communication network using a subscriber identification module 724 (e.g., a SIM card), for example. According to an embodiment of the present disclosure, the cellular module 721 may perform at least a portion of functions that the processor 710 provides. According to an embodiment of the present disclosure, the cellular module 721 may include a communication processor (CP).

Each of the Wi-Fi module 723, the BT module 725, the GNSS module 727, and the NFC module 728 may include a processor for processing data exchanged through a corresponding module, for example. According to an embodiment of the present disclosure, at least a portion (e.g., two or more components) of the cellular module 721, the Wi-Fi module 723, the BT module 725, the GNSS module 727, and the NFC module 728 may be included within one Integrated Circuit (IC) or an IC package.

The RF module 729 may transmit and receive a communication signal (e.g., an RF signal). The RF module 729 may include a transceiver, a power amplifier module (PAM), a frequency filter, a low noise amplifier (LNA), an antenna, or the like. According to various embodiments of the present disclosure, at least one of the cellular module 721, the Wi-Fi module 723, the BT module 725, the GNSS module 727, or the NFC module 728 may transmit and receive an RF signal through a separate RF module. The subscriber identification module 724 may include, for example, a subscriber identification module and may include unique identify information (e.g., integrated circuit card identifier (ICCID)) or subscriber information (e.g., integrated mobile subscriber identity (IMSI)).

The memory 730 (e.g., the memory 170 in FIG. 1) may include an internal memory 732 or an external memory 734. For example, the internal memory 732 may include at least one of a volatile memory (e.g., a dynamic random access memory (DRAM), a static RAM (SRAM), or a synchronous DRAM (SDRAM)), a nonvolatile memory (e.g., a one-time programmable read only memory (OTPROM), a programmable ROM (PROM), an erasable and programmable ROM (EPROM), an electrically erasable and programmable ROM (EEPROM), a mask ROM, a flash ROM, a NAND flash memory, or a NOR flash memory), a hard drive, or a solid state drive (SSD).

The external memory 734 may include a flash drive, for example, compact flash (CF), secure digital (SD), micro secure digital (Micro-SD), mini secure digital (Mini-SD), extreme digital (xD), multimedia card (MMC), a memory stick, or the like. The external memory 734 may be functionally and/or physically connected to the electronic device 701 through various interfaces.

The sensor module 740 may measure, for example, a physical quantity or may detect an operation state of the electronic device 701. The sensor module 740 may convert the measured or detected information to an electric signal. The sensor module 740 may include at least one of a gesture sensor 740A, a gyro sensor 740B, an atmospheric pressure sensor 740C, a magnetic sensor 740D, an acceleration sensor 740E, a grip sensor 740F, a proximity sensor 740G, a color sensor 740H (e.g., red, green, blue (RGB) sensor), a BIO sensor 7401, a temperature/humidity sensor 740J, an illuminance sensor 740K, or an UV sensor 740M. Although not illustrated, additionally or generally, the sensor module 740 may further include, for example, an E-nose sensor, an electromyography (EMG) sensor, an electroencephalogram (EEG) sensor, an electrocardiogram (ECG) sensor, a photoplethysmographic (PPG) sensor, an infrared (IR) sensor, an iris sensor, and/or a fingerprint sensor. The sensor module 740 may further include a control circuit for controlling at least one or more sensors included therein. According to an embodiment of the present disclosure, the electronic device 701 may further include a processor which is a part of the processor 710 or independent of the processor 710 and is configured to control the sensor module 740. The processor may control the sensor module 740 while the processor 710 remains at a sleep state.

The input device 750 may include, for example, a touch panel 752, a (digital) pen sensor 754, a key 756, or an ultrasonic input unit 758. The touch panel 752 may use at least one of capacitive, resistive, infrared and ultrasonic detecting methods. Also, the touch panel 752 may further include a control circuit. The touch panel 752 may further include a tactile layer to provide a tactile reaction to a user.

The (digital) pen sensor 754 may be, for example, a part of a touch panel or may include an additional sheet for recognition. The key 756 may include, for example, a physical button, an optical key, a keypad, and the like. The ultrasonic input device 758 may detect (or sense) an ultrasonic signal, which is generated from an input device, through a microphone (e.g., a microphone 788) and may check data corresponding to the detected ultrasonic signal.

The display 760 may include a panel 762, a hologram device 764, or a projector 766. The panel 762 may be implemented, for example, as flexible, transparent, or wearable. The panel 762 and the touch panel 752 may be integrated into a single module. The hologram device 764 may display a stereoscopic image in a space using a light interference phenomenon. The projector 766 may project light onto a screen so as to display an image. The screen may be arranged in the inside or the outside of the electronic device 701. According to an embodiment of the present disclosure, the display 760 may further include a control circuit for controlling the panel 762, the hologram device 764, or the projector 766.

The interface 770 may include, for example, an HDMI (high-definition multimedia interface) 772, a USB (universal serial bus) 774, an optical interface 776, or a D-sub (D-subminiature) 778. The interface 770 may be included, for example, in a communication interface 870 illustrated in FIG. 8, which will be explained later. Additionally or generally, the interface 770 may include, for example, a mobile high definition link (MHL) interface, a SD card/multi-media card (MMC) interface, or an infrared data association (IrDA) standard interface.

The audio module 780 may convert a sound and an electric signal in dual directions. At least a portion of the audio module 780 may be included, for example, in an input/output interface 850 illustrated in FIG. 8, which will be explained later. The audio module 780 may process, for example, sound information that is input or output through a speaker 782, a receiver 784, an earphone 786, or a microphone 788.

The camera module 791 for shooting a still image or a video may include, for example, at least one image sensor (e.g., a front sensor or a rear sensor), a lens, an image signal processor (ISP), or a flash (e.g., an LED or a xenon lamp).

The power management module 795 may manage, for example, power of the electronic device 701. According to an embodiment of the present disclosure, a power management integrated circuit (PMIC), a charger IC, or a battery or fuel gauge may be included in the power management module 795. The PMIC may have a wired charging method and/or a wireless charging method. The wireless charging method may include, for example, a magnetic resonance method, a magnetic induction method or an electromagnetic method and may further include an additional circuit, for example, a coil loop, a resonant circuit, or a rectifier, and the like. The battery gauge may measure, for example, a remaining capacity of the battery 796 and a voltage, current or temperature thereof while the battery is charged. The battery 796 may include, for example, a rechargeable battery or a solar battery.

The indicator 797 may display a specific state of the electronic device 701 or a portion thereof (e.g., a processor 710), such as a booting state, a message state, a charging state, and the like. The motor 798 may convert an electrical signal into a mechanical vibration and may generate the following effects: vibration, haptic, and the like. Although not illustrated, a processing device (e.g., a GPU) for supporting a mobile TV may be included in the electronic device 701. The processing device for supporting a mobile TV may process media data according to the standards of DMB, digital video broadcasting (DVB), MediaFloTM, or the like.

Each of the above-mentioned elements of the electronic device according to various embodiments of the present disclosure may be configured with one or more components, and the names of the elements may be changed according to the type of the electronic device. The electronic device according to various embodiments of the present disclosure may include at least one of the above-mentioned elements, and some elements may be omitted or other additional elements may be added. Furthermore, some of the elements of the electronic device according to various embodiments of the present disclosure may be combined with each other so as to form one entity, so that the functions of the elements may be performed in the same manner as before the combination.

FIG. 8 is a diagram illustrating an electronic device in a network environment, according to various embodiments of the present disclosure. An electronic device 801 may include the same as or similar to components of the electronic device 100 illustrated in FIG. 1.

Referring to FIG. 8, there is illustrated an electronic device 801 in a network environment 800 according to various embodiments of the present disclosure. The electronic device 801 may include a bus 810, a processor 820, a memory 830, an input/output (I/O) interface 850, a display 860, and a communication interface 870. According to an embodiment of the present disclosure, the electronic device 801 may not include at least one of the above-described components or may further include other component(s).

The bus 810 may interconnect the above-described components 810 to 870 and may be a circuit for conveying communications (e.g., a control message and/or data) among the above-described components.

The processor 820 may include one or more of a central processing unit (CPU), an application processor (AP), or a communication processor (CP). The processor 820 may perform, for example, data processing or an operation associated with control or communication of at least one other component(s) of the electronic device 801.

The memory 830 may include a volatile and/or nonvolatile memory. The memory 830 may store instructions or data associated with at least one other component(s) of the electronic device 801. According to various embodiments of the present disclosure, the memory 830 may store software and/or a program 840. The program 840 may include, for example, a kernel 841, a middleware 843, an application programming interface (API) 845, and/or an application (or an application program) 847. At least a portion of the kernel 841, the middleware 843, or the API 845 may be called an "operating system (OS)".

The kernel 841 may control or manage system resources (e.g., the bus 810, the processor 820, the memory 830, and the like) that are used to execute operations or functions of other programs (e.g., the middleware 843, the API 845, and the application program 847). Furthermore, the kernel 841 may provide an interface that allows the middleware 843, the API 845, or the application program 847 to access discrete components of the electronic device 801 so as to control or manage system resources.

The middleware 843 may perform a mediation role such that the API 845 or the application program 847 communicates with the kernel 841 to exchange data.

Furthermore, the middleware 843 may process task requests received from the application program 847 according to a priority. For example, the middleware 843 may assign the priority, which makes it possible to use a system resource (e.g., the bus 810, the processor 820, the memory 830, or the like) of the electronic device 801, to at least one of the application program 847. For example, the middleware 843 may process the one or more task requests according to the priority assigned to the at least one, which makes it possible to perform scheduling or load balancing on the one or more task requests.

The API 845 may be an interface through which the application program 847 controls a function provided by the kernel 841 or the middleware 843, and may include, for example, at least one interface or function (e.g., an instruction) for a file control, a window control, image processing, a character control, or the like.

The I/O interface 850 may transmit an instruction or data, input from a user or another external device, to other component(s) of the electronic device 801. Furthermore, the I/O interface 850 may output an instruction or data, received from other component(s) of the electronic device 801, to a user or another external device.

The display 860 may include, for example, a liquid crystal display (LCD), a light-emitting diode (LED) display, an organic LED (OLED) display, or a microelectromechanical systems (MEMS) display, or an electronic paper display. The display 860 may display, for example, various contents (e.g., a text, an image, a video, an icon, a symbol, and the like) to a user. The display 860 may include a touch screen and may receive, for example, a touch, gesture, proximity, or hovering input using an electronic pen or a portion of a user's body.

The communication interface 870 may establish communication between the electronic device 801 and an external electronic device (e.g., a first external electronic device 802, a second external electronic device 804, or a server 806). For example, the communication interface 870 may be connected to a network 862 through wireless communication or wired communication to communicate with an external device (e.g., a second external electronic device 804 or a server 806).

The wireless communication may include at least one of, for example, a long-term evolution (LTE), an LTE Advance (LTE-A), a code division multiple access (CDMA), a wideband CDMA (WCDMA), a universal mobile telecommunications system (UMTS), a wireless broadband (WiBro), a global system for mobile communications (GSM), or the like, as a cellular communication protocol. Furthermore, the wireless communication may include, for example, a local area network 864. The local area network 864 may include at least one of, for example, a wireless fidelity (Wi-Fi), a Bluetooth, a near field communication (NFC), a global navigation satellite system (GNSS), or the like. The GNSS may include at least one of, for example, a global positioning system (GPS), a global navigation satellite system (Glonass), a beidou navigation satellite system(hereinafter referred to as "Beidou"), or an European global satellite-based navigation system (hereinafter referred to as "Galileo") based on an available region, a bandwidth, or the like. Hereinafter "GPS" and "GNSS" may be used interchangeably in this disclosure. For example, the wired communication may include at least one of, for example, a universal serial bus (USB), a high definition multimedia interface (HDMI), a recommended standard-232 (RS-232), a plain old telephone service (POTS), or the like. For example, the network 862 may include at least one of telecommunications networks, for example, a computer network (e.g., local area network (LAN) or wide area network (WAN)), an internet, or a telephone network.

Each of the first and second external electronic devices 802 and 804 may be a device of which the type is different from or the same as that of the electronic device 801. According to an embodiment of the present disclosure, the server 806 may include a group of one or more servers. According to various embodiments of the present disclosure, all or a part of operations that the electronic device 801 will perform may be executed by another or plural electronic devices (e.g., the electronic devices 802 and 804 and the server 806). According to an embodiment of the present disclosure, in the case where the electronic device 801 executes any function or service automatically or in response to a request, the electronic device 801 may not perform the function or the service internally, but, alternatively additionally, it may request at least a portion of a function associated with the electronic device 801 at other device (e.g., the electronic device 802 or 804 or the server 806). The other electronic device (e.g., the electronic device 802 or 804 or the server 806) may execute the requested function or additional function and may transmit the execution result to the electronic device 801. The electronic device 801 may provide the requested function or service using the received result or may additionally process the received result to provide the requested function or service. To this end, for example, cloud computing, distributed computing, or client-server computing may be used.

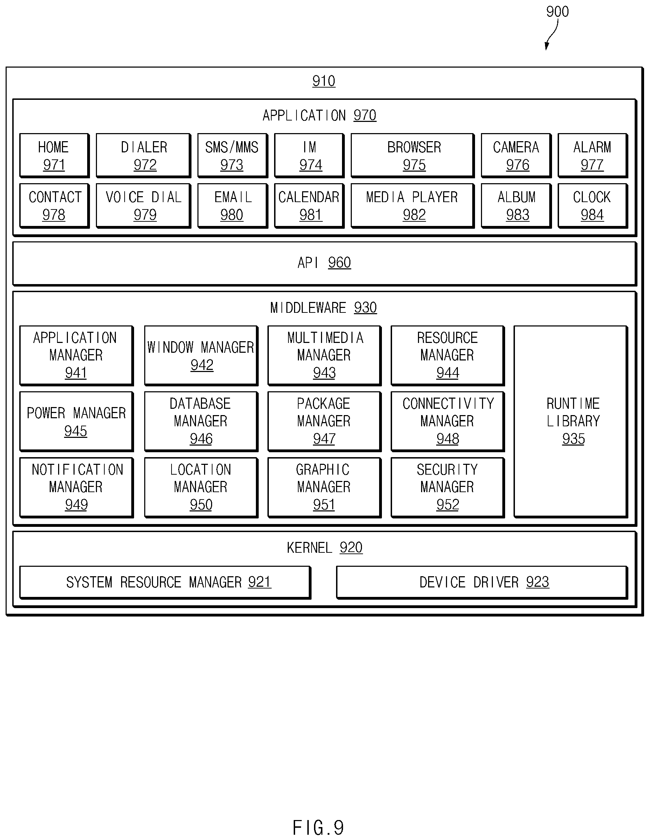

FIG. 9 illustrates a block diagram of a program module according to various embodiments of the present disclosure. According to an embodiment of the present disclosure, a program module 910 (e.g., the program 840 in FIG. 8) may include an operating system (OS) to control resources associated with an electronic device (e.g., the electronic device 801 in FIG. 8), and/or diverse applications (e.g., the application program 847 in FIG. 8) driven on the OS. The OS may be, for example, android, iOS, windows, symbian, tizen, or bada.

The program module 910 may include a kernel 920, a middleware 930, an application programming interface (API) 960, and/or an application 970. At least a part of the program module 910 may be preloaded on an electronic device or may be downloadable from an external electronic device (e.g., the electronic device 802 or 804, the server 806, and the like in FIG. 8).

The kernel 920 (e.g., the kernel 841 in FIG. 8) may include, for example, a system resource manager 921 or a device driver 923. The system resource manager 921 may perform control, allocation, or retrieval of system resources. According to an embodiment of the present disclosure, the system resource manager 921 may include a process managing part, a memory managing part, or a file system managing part. The device driver 923 may include, for example, a display driver, a camera driver, a Bluetooth driver, a common memory driver, an USB driver, a keypad driver, a Wi-Fi driver, an audio driver, or an inter-process communication (IPC) driver.

The middleware 930 may provide, for example, a function which the application 970 needs in common, or may provide diverse functions to the application 970 through the API 960 to allow the application 970 to efficiently use limited system resources of the electronic device. According to an embodiment of the present disclosure, the middleware 930 (e.g., the middleware 843 in FIG. 8) may include at least one of a runtime library 935, an application manager 941, a window manager 942, a multimedia manager 943, a resource manager 944, a power manager 945, a database manager 946, a package manager 947, a connectivity manager 948, a notification manager 949, a location manager 950, a graphic manager 951, or a security manager 952.

The runtime library 935 may include, for example, a library module which is used by a compiler to add a new function through a programming language while the application 970 is being executed. The runtime library 935 may perform input/output management, memory management, or capacities about arithmetic functions.

The application manager 941 may manage, for example, a life cycle of at least one application of the application 970. The window manager 942 may manage a GUI resource which is used in a screen. The multimedia manager 943 may identify a format necessary for playing diverse media files, and may perform encoding or decoding of media files by using a codec suitable for the format. The resource manager 944 may manage resources such as a storage space, memory, or source code of at least one application of the application 970.

The power manager 945 may operate, for example, with a basic input/output system (BIOS) to manage a battery or power, and may provide power information for an operation of an electronic device. The database manager 946 may generate, search for, or modify database which is to be used in at least one application of the application 970. The package manager 947 may install or update an application which is distributed in the form of package file.

The connectivity manager 948 may manage, for example, wireless connection such as Wi-Fi or Bluetooth. The notification manager 949 may display or notify an event such as arrival message, promise, or proximity notification in a mode that does not disturb a user. The location manager 950 may manage location information of an electronic device. The graphic manager 951 may manage a graphic effect that is provided to a user, or manage a user interface relevant thereto. The security manager 952 may provide a general security function necessary for system security or user authentication. According to an embodiment of the present disclosure, in the case where an electronic device (e.g., the electronic device 801 in FIG. 8) includes a telephony function, the middleware 930 may further includes a telephony manager for managing a voice or video call function of the electronic device.

The middleware 930 may include a middleware module that combines diverse functions of the above-described components. The middleware 930 may provide a module specialized to each OS kind to provide differentiated functions. Additionally, the middleware 930 may remove a part of the preexisting components, dynamically, or may add a new component thereto.

The API 960 (e.g., the API 845 in FIG. 8) may be, for example, a set of programming functions and may be provided with a configuration which is variable depending on an OS. For example, in the case where an OS is the android or the iOS, it may be permissible to provide one API set per platform. In the case where an OS is the tizen, it may be permissible to provide two or more API sets per platform.

The application 970 (e.g., the application program 847 in FIG. 8) may include, for example, one or more applications capable of providing functions for a home 971, a dialer 972, an SMS/MMS 973, an instant message (IM) 974, a browser 975, a camera 976, an alarm 977, a contact 978, a voice dial 979, an e-mail 980, a calendar 981, a media player 982, an album 983, and a clock 984, or for offering health care (e.g., measuring an exercise quantity or blood sugar) or environment information (e.g., atmospheric pressure, humidity, or temperature).

According to an embodiment of the present disclosure, the application 970 may include an application (hereinafter referred to as "information exchanging application" for descriptive convenience) to support information exchange between the electronic device (e.g., the electronic device 801 in FIG. 8) and an external electronic device (e.g., the electronic device 802 or 804 in FIG. 8). The information exchanging application may include, for example, a notification relay application for transmitting specific information to the external electronic device, or a device management application for managing the external electronic device.

For example, the information exchanging application may include a function of transmitting notification information, which arise from other applications (e.g., applications for SMS/MMS, e-mail, health care, or environmental information), to an external electronic device (e.g., the electronic device 802 or 804 in FIG. 8). Additionally, the information exchanging application may receive, for example, notification information from an external electronic device and provide the notification information to a user.

The device management application may manage (e.g., install, delete, or update), for example, at least one function (e.g., turn-on/turn-off of an external electronic device itself (or a part of components) or adjustment of brightness (or resolution) of a display) of the external electronic device (e.g., the electronic device 802 or 804 in FIG. 8) which communicates with the electronic device, an application running in the external electronic device, or a service (e.g., a call service, a message service, or the like) provided from the external electronic device.

According to an embodiment of the present disclosure, the application 970 may include an application (e.g., a health care application of a mobile medical device, and the like) which is assigned in accordance with an attribute (e.g., an attribute of a mobile medical device as a kind of electronic device) of the external electronic device (e.g., the electronic device 802 or 804 in FIG. 8). According to an embodiment of the present disclosure, the application 970 may include an application which is received from an external electronic device (e.g., a server 806 or an electronic device 802 or 804). According to an embodiment of the present disclosure, the application 970 may include a preloaded application or a third party application which is downloadable from a server. The component titles of the program module 910 according to the embodiment of the present disclosure may be modifiable depending on kinds of OSs.

According to various embodiments of the present disclosure, at least a portion of the program module 910 may be implemented by software, firmware, hardware, or a combination of two or more thereof. At least a portion of the program module 910 may be implemented (e.g., executed), for example, by a processor (e.g., the processor 820 in FIG. 8). At least a portion of the program module 910 may include, for example, modules, programs, routines, sets of instructions, or processes, or the like for performing one or more functions.

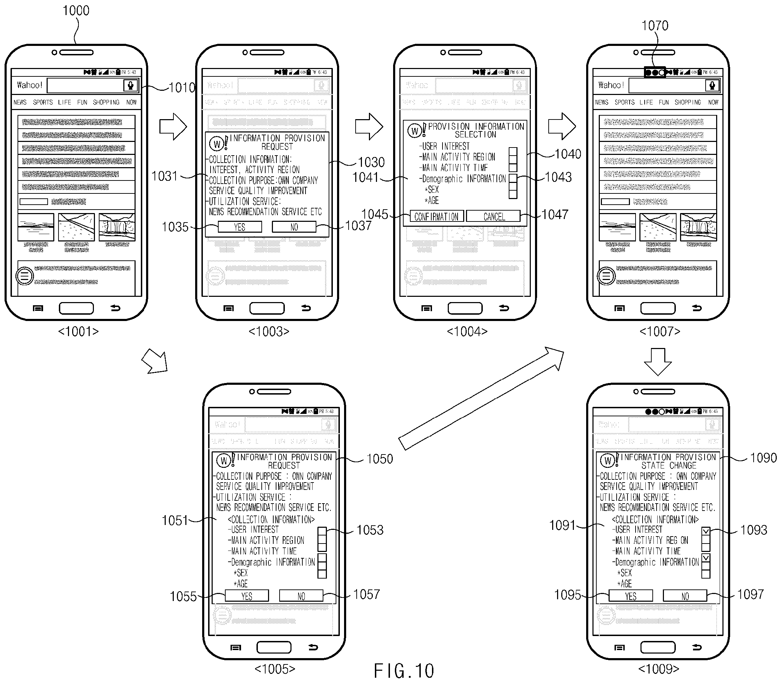

FIG. 10 is a diagram illustrating a screen related to provision of user information, according to various embodiments of the present disclosure.

Referring to FIG. 10, in the case of executing an application program provided by a CP or accessing a web page provided by a CP, the information processing device 1000 may receive the related information from a server (e.g., the CP operation server 270 in FIG. 2) which the CP operates and may output the related information on a screen 1010 as shown in state 1001. In this regard, the information processing device 1000 may confirm whether the CP is the CP authenticated by the CP authentication server (e.g., the CP authentication server 230 in FIG. 2). Furthermore, the information processing device 1000 may confirm whether the service provided by the CP is used for the first time.

In the case where the service provided by the CP is used for the first time, the information processing device 1000 may output a display object (e.g., an information provision request object) to confirm consent to provision of the user information on the screen 1010. According to an embodiment of the present disclosure, in the case where the provision of user information is refused in the previous use of the service or in the case where the state in which user information is provided is set as the refusal state in advance, the information processing device 1000 may output or may not output the information provision request object on the screen 1010 even though the service provided from the CP is not used for the first time.

According to various embodiments of the present disclosure, the information processing device 1000 may output an information provision request object 1030 on a specific area of the screen 1010 as a pop-up as shown in state 1003. The information provision request object 1030 may include a user information-associated policy 1031 of the CP, an information provision consent button 1035, an information provision refusal button 1037, and the like. The user information-associated policy 1031 may include information about a kind or a use purpose of user information to collect, an offering benefit, or the like. According to an embodiment of the present disclosure, the information processing device 1000 may differently display a text or an image of the user information-associated policy 1031, based on classification reference information of user information. Furthermore, the information processing device 1000 may differently display at least one of a background color of the information provision request object 1030, a boundary thickness/shape/color of the boundary of the information provision request object 1030, an image or a text of the information provision request object 1030, based on classification reference information of user information. According to an embodiment of the present disclosure, the information processing device 1000 may differently display at least one of a display location, a display time, or a display speed of the information provision request object 1030 or may differently display at least one of a flickering speed, a flickering duration, or a light emitting color of a flickering device (e.g., an LED) attached to the information processing device 1000 at a point in time when the information provision request object 1030 is displayed.

According to various embodiments of the present disclosure, in the case where the information provision refusal button 1037 is selected, the information processing device 1000 may not provide user information requested by the CP. Furthermore, the information processing device 1000 may stop outputting the information provision request object 1030 and may return to a screen as shown in state 1001. According to an embodiment of the present disclosure, the information processing device 1000 may provide fragmentary user information to the CP so as not to cause an issue in using the service.

According to various embodiments of the present disclosure, in the case where the information provision consent button 1035 is selected, the information processing device 1000 may display an object (e.g., a provision information selection object 1040), which is used to select information to be provided from among user information requested by the CP, on a specific area of the screen 1010 as shown in state 1004. The provision information selection object 1040 may include a kind 1041 of user information, a check box 1043 for selecting whether to provide information, an information selection confirmation button 1045, and an information selection refusal button 1047.

According to various embodiments of the present disclosure, the information processing device 1000 may classify the kind 1041 of user information for each kind of user information requested by the CP and may display the classified result. For example, the information processing device 1000 may classify and display the user information into categories, such as a life pattern, interest information, a consumption pattern, or the like of the user. Furthermore, the information processing device 1000 may display detail items (e.g., main activity area or time) included in each of the categories (e.g., the life pattern) to be adjacent to the corresponding category. According to an embodiment of the present disclosure, the information processing device 1000 may differently display a text or an image about a kind of the user information 1041, based on classification reference information of user information.

According to various embodiments of the present disclosure, the information processing device 1000 may differently process the display state of the check box 1043 corresponding to the selection of the check box 1043. For example, the information processing device 1000 may toggle and display a selection state and a non-selection state of the check box 1043 based on the user selection. According to an embodiment of the present disclosure, the check box 1043 may be implemented with a button.

According to various embodiments of the present disclosure, in the case where the information selection cancel button 1047 is selected, the information processing device 1000 may determine whether to provide information, based on a state indicating whether a specific user information is provided. Alternatively, in the case where there is no information about a state in which user information is provided, in which the state is set in advance, the information processing device 1000 may return to screen as shown in state 1003. According to an embodiment of the present disclosure, in the case where the information selection cancel button 1047 is selected, the information processing device 1000 may process to provide user information requested by the CP or may process to provide a portion of user information.

According to various embodiments of the present disclosure, in the case where the information selection confirmation button 1045 is selected, the information processing device 1000 may process to provide the selected user information to the CP. Furthermore, the information processing device 1000 may display the corresponding objects based on the execution routine of the service provided by the CP, on the screen 1010. According to various embodiments of the present disclosure, the information processing device 1000 may store a kind of the selected user information so as to be connected with or included in a white list for each CP in a memory (e.g., the memory 170 in FIG. 1).

According to various embodiments of the present disclosure, in the case where the information selection confirmation button 1045 is selected, the information processing device 1000 may stop outputting the provision information selection object 1040 and may display an object (e.g., an information provision state object 1070), which indicates a user information provision state, on a specific area (e.g., an indicate bar) of the screen 1010 as shown in state 1007. At a point in time of transmitting user information, the information processing device 1000 may differently display the information provision state object 1070 based on a user information transmission state or classification reference information of user information in real time. For example, while user information is being transmitted, the information processing device 1000 may change and display an image of the information provision state object 1070 in a specific interval so as to have the flickering effect. Furthermore, the information processing device 1000 may differently display a kind, a brightness, a shape, a transparency, or the like of an image of the information provision state object 1070 based on the risk level of user information.

According to various embodiments of the present disclosure, in the case where the information provision state object 1070 is selected, the information processing device 1000 may display an object (e.g., an information provision state change object 1090), which makes it possible to change a user information provision state, on a specific area of the screen 1010, as shown in state 1009. The information provision state change object 1090 may include a user information-associated policy 1091, a check box 1093 for selecting whether or not to provide, an information change confirmation button 1095, and an information change cancel button 1097. The information processing device 1000 may classify the user information-associated policy 1091 according to kinds of user information and may display the classified result. The check box 1093 may perform a function which is the same as or similar to that of the check box 1043 included in the provision information selection object 1040 and may perform the operation which is the same as or similar to that of the check box 1043.

According to various embodiments of the present disclosure, in the case where the information change cancel button 1097 is selected, the information processing device 1000 may stop outputting the information provision state change object 1090, and may return to a screen as shown in state 1007. According to various embodiments of the present disclosure, in the case where the information change confirmation button 1095 is selected, the information processing device 1000 may process to provide the selected user information to the CP. Furthermore, the information processing device 1000 may store a kind of the selected user information in memory (e.g., the memory 170 in FIG. 1) so as to be connected with or included in the white list for each CP. Furthermore, the information processing device 1000 may stop outputting the information provision state change object 1090 and may display the corresponding objects according to an execution routine of a service provided by the CP on the screen 1010.

According to various embodiments of the present disclosure, to display the information provision request object on the screen 1010, instead of separately displaying a function which makes it possible to select whether to provide information, as shown in state 1003, the information processing device 1000 may configure the object which has the following: a function which make it possible to select whether to consent to provision and a function which make it possible to select information to be provided, as shown in state 1005. For example, the information processing device 1000 may display an information provision request object 1050, which includes an user information-associated policy 1051, a check box 1053 for selecting whether or not to provide, an information provision consent button 1055, and an information provision refusal button 1057. The user information-associated policy 1051 may have the configuration which is the same as or similar to the user information-associated policy 1091 included in the information provision state change object 1090. Furthermore, the check box 1053 may perform a function which is the same as or similar to that of the check box 1093 included in the provision information state change object 1090 and may perform an operation which is the same as or similar to that of the check box 1093. The information provision refusal button 1057 may perform a function which is the same as or similar to that of the information provision refusal button 1037 included in the information provision request object 1030 as shown in state 1003 and may perform an operation which is the same as or similar to that of the information provision refusal button 1037. However, the information provision consent button 1055 may operate to be different from the information provision consent button 1035 included in the information provision request object 1030 as shown in state 1003. For example, the information processing device 1000 may immediately switch to the screen of state 1007 since the information processing device 1000 processes the information provision consent and the provision information selection in batch process in state 1005.

According to various embodiments of the present disclosure, to transmit the selected user information to the CP, the information processing device 1000 may connect a session to the CP to transmit information through a specific session protocol. The information processing device 1000 may control a state of the session based on a state of a service provided by the CP. For example, in the case where the service is in an active state (e.g., a state in which the service operates in foreground), the information processing device 1000 may maintain the session connection with the CP. In the case where the service is in an inactive state (e.g., switched to the background), the information processing device 1000 may end the session connection with the CP after a specific time elapses. According to an embodiment of the present disclosure, the information processing device 100 may specify the period of the use of the session key used in the session connection with the CP. The session key may be encoded and decoded information generated to guarantee the security of the session in communicating between the information processing device 1000 and the CP. In the case where the period of the use of the session key is expired, the information processing device 1000 may process to end the session connection with the CP. Furthermore, at the point in time of ending the session connection, the CP may delete user information collected from the information processing device 1000 and may notify the completion of the deletion to the information processing device 1000.

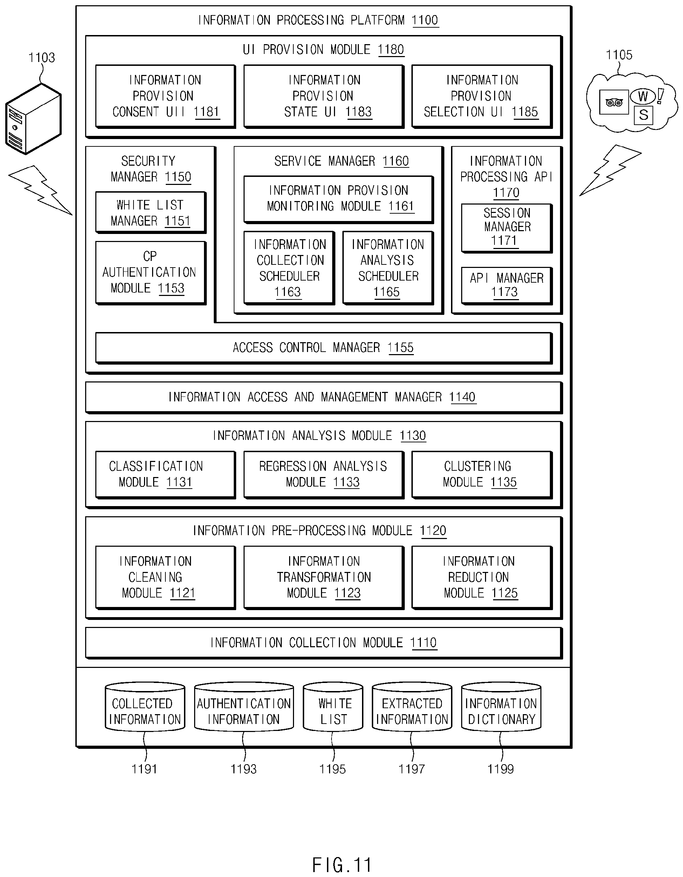

FIG. 11 is a block diagram illustrating a user information processing platform according to various embodiments of the present disclosure. According to an embodiment of the present disclosure, an information processing platform 1100 may be all or a part of the user information processing device (e.g., the user information processing device 100 in FIG. 1) and may be an architecture which shows the connection relationships between functions for processing user information. According to various embodiments of the present disclosure, the information processing platform 1100 may operate in the form of a service. Furthermore, all or a part of the information processing platform 1100 may be included in a platform (or operating system) which is supported by the user information processing device or may be configured as service applications.

Referring to FIG. 11, the information processing platform 1100 may include an information collection module 1110, an information pre-processing module 1120, an information analysis module 1130, an information access and management manager 1140, a security manager 1150, a service manager 1160, an information processing API 1170, and a UI provision module 1180. According to an embodiment of the present disclosure, the information processing platform 1100 may include a database (hereinafter referred to as "DB"). The DB may be a set of information stored in a storage media (e.g., the memory 170 illustrated in FIG. 1). The DB may include collected information 1191, authentication information 1193, a white list 1195, extracted information 1197, and an information dictionary 1199.

The information collection module 1110 may perform a function which is the same as or similar to that of the information collection module 111 illustrated in FIG. 1. For example, the information collection module 1110 may collect user information. The information collection module 1110 may collect use history information of the user information processing device. Furthermore, the information collection module 1110 may collect use history information of an external electronic device which is connected with the user information processing device through wired/wireless communications. The information collection module 1110 may store the collected user information as the collected information 1191 in the DB.

The information pre-processing module 1120 may perform a function to improve the information quality or to convert the information into a suitable form for analysis before the collected user information is analyzed and extracted. The information pre-processing module 1120 may include an information cleaning module 1121, an information transformation module 1123, and an information reduction module 1125.

The information cleaning module 1121 may clean the collected user information. For example, the information cleaning module 1121 may modify information which is not consistent, information which is not complete, or information which has an error or may delete duplicated information or unnecessary information.

The information transformation module 1123 may transform the user information to a suitable form for analysis. According to an embodiment of the present disclosure, the information transformation module 1123 may normalize information. For example, the information transformation module 1123 may transform the information into a specific form so as to be included in a specific scope.

The information reduction module 1125 may reduce user information into information related to the analysis. For example, the information reduction module 1125 may reduce an unnecessary part of the information into simple and valuable information without any loss of contents of user information. According to various embodiments of the present disclosure, the information pre-processing module 1120 may further include additional component(s) as well as the above-described components.

The information analysis module 1130 may perform a function which is the same as or similar to that of the information analysis module 113 illustrated in FIG. 1. For example, the information analysis module 1130 may analyze the user information. Furthermore, the information analysis module 1130 may perform data mining, in which the useful correlation between user information is found based on the analyzed result and thus valuable information is extracted. The information analysis module 1130 may include a classification module 1131, a regression analysis module 1133, and a clustering module 1135.

The classification module 1131 may classify pre-processed user information. For example, the classification module 1131 may classify the user information into items, such as a sex, a marriage status, an age, a family relationship, or the like. The regression analysis module 1133 may analyze whether a specific information is affected by other information through a causal relationship among user information. The clustering module 1135 may collect information with similar attribute into a single group and may perform a function to separate the pre-processed user information into a plurality of partial groups. Besides, the information analysis module 1130 may further include a module which performs the various functions used by a method for data mining. Furthermore, the information analysis module 1130 may store user information extracted through the data mining as the extracted information 1197 in the DB.

The information access and management manager 1140 may perform a function which searches and inquires the information stored in the DB and manages the capacity of the stored information. According to an embodiment of the present disclosure, the information access and management manager 1140 may search, retrieve, modify, add, delete, or the like the stored information by querying the DB. In this case, the information access and management manager 1140 may quickly access to information which is looked for utilizing the information dictionary 1199 stored in the DB. The information dictionary 1199 may include information, for example, an identifier, a classification item, a storage location, or the like, about the information (e.g., collected information 1191, authentication information 1193, a white list 1195, or extracted information 1197) stored in the DB. According to an embodiment of the present disclosure, the information access and management manager 1140 may delete the information, which is less important, from among the stored information such that the capacity of the information stored in the DB does not exceed a specific size. For example, the information access and management manager 1140 may determine the importance of information based on a time at which the information is stored, a use frequency of the information, and a relationship with other information and may delete the information which is determined as being less important.

The security manager 1150 may perform the security processing, such as the authentication management about a CP and the access control to the DB. The security manager 1150 may include a white list manager 1151, a CP authentication module 1153, and an access control manager 1155.

The white list manager 1151 may collect a white list from the CP authentication server 1103 periodically, in real time, or when there is a change in the white list and may store the white list as the white list 1195 in the DB. The white list manager 1151 may perform a function which is the same as or similar to the white list management module 116 in FIG. 1. The CP authentication module 1153 may authenticate the CP. For example, the CP authentication module 1153 may confirm the white list 1195 stored in the DB to confirm whether the CP is the authenticated CP, at a point in time when the user information processing device uses a service provided by the CP. In this case, the white list manager 1151 may collect a white list from the CP authentication server 1103 and may update the DB before the CP authentication module 1153 confirms the white list 1195. The access control manager 1155 may perform a function which manages a user information-associated policy for each CP and manages the right about the information access. According to an embodiment of the present disclosure, the access control manager 1155 may confirm the user information-associated policy of each CP based on the authentication information 1193 stored in the DB and may control the information access based on the corresponding policy.

The service manager 1160 may schedule the collection and analysis of user information and may monitor a user information provision state. The service manager 1160 may include an information provision monitoring module 1161, an information collection scheduler 1163, and an information analysis scheduler 1165.

The information provision monitoring module 1161 may monitor user information being transmitted to the CP operation server 1105 in real time. For example, in the case where whether there is user information which is waiting for transmission or is currently being transmitted and the user information exist, the information provision monitoring module 1161 may monitor the corresponding information, a kind of the user information, classification reference information about the user information, or the like. The information collection scheduler 1163 may control a state of the information collection module 1110. According to an embodiment of the present disclosure, the information collection scheduler 1163 may control whether to activate the information collection module 1110 based on the current consumption of the user information processing device, a remaining capacity of a battery, a kind of the network, a use rate of the network (e.g., traffic), or the like. For example, in the case where the user information processing device is being charged or is connected with Wi-Fi, the information collection scheduler 1163 may activate the information collection module 1110 and may collect user information. Furthermore, the information collection scheduler 1163 may manage the period of collection for user information so as to update user information periodically.

The information analysis scheduler 1165 may control a state of the information analysis module 1130. According to an embodiment of the present disclosure, the information analysis scheduler 1165 may control whether to activate the information analysis module 1130 based on the current consumption of the user information processing device, a remaining capacity of a battery, or the like. For example, in the case where the user information processing device is being charged, the information analysis scheduler 1165 may activate the information analysis module 1130 and may let the information analysis module 1130 to analyze the collected user information.

The information processing API 1170 may include at least one of an interface or a function (e.g., an instruction) for a session connection to the CP operation server 1105 and for transmitting/receiving the information to/from the CP operation server 1105, or the like, as a connection interface between the information processing platform 1100 and the CP operation server 1105. The information processing API 1170 may include a session manager 1171 and an API manager 1173.

The session manager 1171 may control a session connection between the user information processing device and the CP operation server 1105. For example, the session manager 1171 may control a state of the session, such as a generation, maintenance, an end, or the like of the session. The session manager 1171 may perform a function which is the same as or similar to that of the session management module 119 in FIG. 1. According to various embodiments of the present disclosure, in the case where the user information processing device uses the service provided by the CP, for example, in the case where the user information processing device executes an application program provided by the CP or accesses a web page provided by the CP, the session manager 1171 may connect a session to the CP operation server 1105. According to various embodiments of the present disclosure, if the use of the service is ended, the session manager 1171 may end the session. For example, if the use of the service is ended, for example, if the access to the web page is disconnected or the application program is ended, the session manager 1171 may end the session connected to the CP operation server 1105. According to an embodiment of the present disclosure, if the use period of the session key used in connecting the session is expired in the state where the access to the web page is maintained even though the web page is switched to background on the screen or in the state where the application program is running in background, the session connected to the CP operation server 1105 may be ended.

In this regard, the CP operation server 1105 may perform the session management function of the CP operation server 1105 using the session API provided from the information processing platform 1100. The session API may be provided in the form of software development kit (SDK) such that an interface or a function about a generation, maintenance, an end, or the like of the session between electronic devices is defined and used. According to an embodiment of the present disclosure, the session API may have a different form based on the kinds of the services provided by the CP. For example, in the case where the service is not a service by an application program but a web service by a web browser (or a web page), the session API may be provided to perform a function through an object generated in the form of a script (e.g., a java script).

The API manager 1173 may manage the APIs (e.g., a session API) provided to the outside from the information processing platform 1100. The CP may perform a function which connects a session to the information processing platform 1100, transmitting/receiving the information to/from the information processing platform 1100, and the like, using the APIs provided through the API manager 1173. According to various embodiments of the present disclosure, if the session is connected to the user information processing device based on the session API, the CP operation server 1105 may request user information to the user information processing device using the APIs. In this case, the user information processing device may confirm whether the CP is the authenticated CP through the CP authentication module 1153. Furthermore, if the CP is confirmed as the authenticated CP, the access control manager 1155 may confirm the user information-associated policy of the CP in the authenticated information 1193 stored in the DB. Furthermore, the information access and management manager 1140 may search and retrieve user information, which is requested by the CP based on the user information-associated policy of the CP, by querying the DB. While transmitting the retrieved user information to the CP operation server 1105, the information processing platform 1100 may provide a UI based on the transmission state and classification reference information of user information.

The UI provision module 1180 may provide a UI associated with the provision of user information. The UI provision module 1180 may perform a function which is the same as or similar to that of the information displaying module 117 illustrated in FIG. 1. The UI provision module 1180 may include an information provision consent UI 1181, an information provision state UI 1183, and an information provision selection UI 1185.

The information provision consent UI 1181 may provide an interface which makes it possible to select whether to consent to the provision of user information. The information provision consent UI 1181 may output, for example, the information provision request object (e.g., the information provision request object 550 in FIG. 5A) on the screen. Furthermore, if the information provision consent from the user is confirmed through the information provision request object, the information provision consent UI 1181 may store an indication of the consent as the authentication information 1193 in the DB. Furthermore, in the case where the user consents to the provision of information, the information provision consent UI 1181 may store the user information-associated policy about the corresponding CP together with whether or not of user information consent, in the authentication information 1193.

The information provision state UI 1183 may provide an interface which indicates a user information provision state. The information provision state UI 1183 may output, for example, the information provision state object (e.g., the information provision state object 530 in FIG. 5A) on the screen. The information provision state UI 1183 may configure the information provision state object based on the information monitored by the information provision monitoring module 1161 and may display the configured object on the screen. For example, the information provision state UI 1183 may differently output the information provision state object based on the transmission state, classification reference information, or the like of user information which is waiting for transmission or is currently being transmitted to the CP operation server 1105.

The information provision selection UI 1185 may provide an interface which makes it possible to select whether to consent to the provision of the user information. The information provision selection UI 1185 may output, for example, the information provision state change object (e.g., the information provision state change object 570 in FIG. 5B) or the information provision selection object (e.g., the information provision selection object 1040 in FIG. 10) on the screen. Furthermore, if whether the user information is provided or not is selected or changed, the information provision selection UI 1185 may store or update the selected or changed result in the authentication information 1193 of the DB.

The term "module" used herein may represent, for example, a unit including one or more combinations of hardware, software and firmware. The term "module" may be interchangeably used with the terms "unit", "logic", "logical block", "component" and "circuit". The "module" may be a minimum unit of an integrated component or may be a part thereof. The "module" may be a minimum unit for performing one or more functions or a part thereof. The "module" may be implemented mechanically or electronically. For example, the "module" according to various embodiments of the present disclosure may include at least one of an application-specific IC (ASIC) chip, a field-programmable gate array (FPGA), and a programmable-logic device for performing some operations, which are known or will be developed.

According to various embodiments of the present disclosure, at least a portion of an apparatus (e.g., modules or functions thereof) or a method (e.g., operations) according to various embodiments of the present disclosure, for example, may be implemented by instructions stored in a computer-readable storage media in the form of a programmable module. The one or more processors, when the instruction is executed by a processor (e.g., the processor 820 in FIG. 8), may perform a function corresponding to the instruction. The computer-readable storage media, for example, may be the memory 830 in FIG. 8.

A computer-readable recording media may include a hard disk, a floppy disk, a magnetic media (e.g., a magnetic tape), an optical media (e.g., compact disc read only memory (CD-ROM) and a digital versatile disc (DVD, a magneto-optical media (e.g., a floptical disk), and a hardware device (e.g., read only memory (ROM), random access memory (RAM), a flash memory, or the like). Also, a program instruction may include not only a mechanical code such as things generated by a compiler but also a high-level language code executable on a computer using an interpreter. The above hardware unit may be configured to operate via one or more software modules for performing an operation of the present disclosure, and vice versa.

A module or a programming module according to an embodiment of the present disclosure may include at least one of the above elements, or a portion of the above elements may be omitted, or additional other elements may be further included. Operations performed by a module, a programming module, or other elements according to an embodiment of the present disclosure may be executed sequentially, in parallel, repeatedly, or in a heuristic method. Also, a portion of operations may be executed in different sequences, omitted, or other operations may be added.

According to various embodiments of the present disclosure, at a point in time when user information is provided to a CP, information related to information provision may be outputted, thereby securing a transparency about user information provision.

Furthermore, according to various embodiments of the present disclosure, user information may be provided only to the authenticated CP, thereby securing a safety in using user information.

Furthermore, according to various embodiments of the present disclosure, user information may be provided while a specific session is maintained and a request may be made to delete the provided user information at the end of the session, thereby preventing the indiscriminate use or the leak of user information.

Although the present disclosure has been described with an exemplary embodiment, various changes and modifications may be suggested to one skilled in the art. It is intended that the present disclosure encompass such changes and modifications as fall within the scope of the appended claims.

## Claims

1. An electronic device, comprising:
a display configured to output an object; and
a processor configured to:
manage a connection of session between the electronic device and an external server device for providing user information to the external server device;
determine a risk level of the user information; and
control the display to display an information provision state object (530) indicating a user information transmission state, while the user information is being transmitted to the external server device;
change the information provision state object (530)
by changing at least one of a kind of image, a brightness, a shape, and a transparency of the information provision state object (530) based on the risk level of the user information; and
control the display to display the changed information provision state object. (530)

2. The electronic device of claim 1, wherein the processor is further configured to:
receive a user input for selecting the information provision state object; and
control the display to display an information provision state change object for enabling a user to change the user provision state.

3. The electronic device of claim 1, wherein, the processor is arranged to determine whether a service provided by the external server device is used for the first time or a user information-associated policy is changed, and when the service provided by the external server device is used for the first time or the user information-associated policy is changed, to control the display to display an information provision request object which enables a user to select whether to consent to a provision of the user information.

4. The electronic device of claim 3, wherein the processor is further configured to control the display to display differently at least one of a background color of the information provision request object, a thickness/shape/color of a boundary of the information provision request object, an image or a text of the information provision request object, a display location of the information provision request object, a display time of the information provision request object, and a display speed of the information provision request object, based on classification reference information of the user information, or
wherein the processor is configured to change at least one of a flickering speed, a flickering duration, or a light emitting color of a flickering device attached to the electronic device at a point in time when the information provision request object is displayed, based on classification reference information of the user information.

5. The electronic device of claim 1, wherein the processor is further configured to determine whether, at a point in time when the session with the external server device is connected, at a point in time when the session connected with the external server device is ended, or at a point in time when an object making possible to display an information provision history is selected in the state where the session connected with the external server is being maintained, to control the display to display an information provision history object including a provision history of the user information.

6. The electronic device of claim 1, wherein the processor is further configured to transmit the user information while the session connected with the external server device is being maintained.

7. The electronic device of claim 6, wherein, when the session is ended, the processor is further configured to request the external server device to delete the transmitted user information.

8. The electronic device of claim 1, further comprising:
a memory configured to store a list of external server devices designated to receive the user information.

9. The electronic device of claim 8, wherein the memory is configured to store a user information-associated policy of the external server device together with identification information of the external server device.

10. A method for processing user information in an electronic device, the method comprising:
managing a connection of session between the electronic device and an external server device for providing user information to the external server device;
determining a risk level of the user information and displaying an information provision state object (530) indicating a user information transmission
state, while the user information is being transmitted to the external server device; changing the information provision state object (530) by changing at least one of a kind of image, a brightness, a shape, and a transparency of the information provision state object (530) based on the risk level of the user information; and displaying the changed information provision state object (530)

11. The method of claim 10, further comprising:
receive a user input for selecting the information provision state object; and
displaying an information provision state change object for enabling a user to change the user provision state.

12. The method of claim 10, further comprising:
determining (420) whether a service provided by the external server device is used for the first time or a user information-associated policy is changed, and displaying an information provision request object which enables a user to select whether to consent to a provision of the user information when the service provided by the external server device is used for the first time or a user information-associated policy is changed.

13. The method of claim 10, further comprising:
displaying an information provision history object including a provision history of the user information at a point in time when the session connected with the external server device is connected, determining whether, at a point in time when the session connected with the external server device is connected, at a point in time when the session connected with the external server device is ended, or at a point in time when an object making possible to display an information provision history is selected in the state where the session connected with the external server is being maintained.

14. The method of claim 10, further comprising:
transmitting the user information while the session connected with the external server device is being maintained; and
requesting the external server device to delete the user information transmitted when the session is ended.

## Patentansprüche

1. Elektronische Vorrichtung, die Folgendes umfasst:
ein Display, das zum Ausgeben eines Objekts konfiguriert ist; und
einen Prozessor, der konfiguriert ist zum:
Verwalten einer Sitzungsverbindung zwischen der elektronischen Vorrichtung und einer externen Servervorrichtung zum Bereitstellen von Benutzerinformationen für die externe Servervorrichtung;
Bestimmen eines Risikograds der Benutzerinformationen; und
Steuern des Displays, um ein Informationsbereitstellungs-Zustands-Objekt (530) anzuzeigen, das einen Benutzerinformationsübertragungszustand anzeigt, während die Benutzerinformationen an die externe Servervorrichtung übertragen werden;
Ändern des Informationsbereitstellungs-Zustands-Objekts (530) durch Ändern eines Bildtyps, einer Helligkeit, einer Form, und/oder einer Transparenz des Informationsbereitstellungs-Zustands-Objekts (530) basierend auf dem Risikograd der Benutzerinformationen; und
Steuern des Displays, um das geänderte Informationsbereitstellungs-Zustands-Objekt (530) anzuzeigen.

2. Elektronische Vorrichtung nach Anspruch 1, wobei der Prozessor des Weiteren konfiguriert ist zum:
Empfangen einer Benutzereingabe zum Auswählen des Informationsbereitstellungs-Zustands-Objekts; und
Steuern des Displays, um ein Informationsbereitstellungs-Zustands-Veränderungs-Objekt anzuzeigen, um einem Benutzer zu ermöglichen, den Benutzerbereitstellungszustand zu ändern.

3. Elektronische Vorrichtung nach Anspruch 1, wobei der Prozessor angeordnet ist, um zu bestimmen, ob ein Dienst, der von der externen Servervorrichtung bereitgestellt wird, zum ersten Mal verwendet wird oder eine mit Benutzerinformationen verbundene Richtlinie geändert wird, und wenn der Dienst, der von der externen Servervorrichtung bereitgestellt wird, zum ersten Mal verwendet wird oder die mit Benutzerinformationen verbundene Richtlinie geändert wird, um das Display zum Anzeigen eines Informationsbereitstellungs-Anforderungs-Objekts zu steuern, das einem Benutzer ermöglicht, auszuwählen, ob er einer Bereitstellung der Benutzerinformationen zustimmt.

4. Elektronische Vorrichtung nach Anspruch 3, wobei der Prozessor des Weiteren konfiguriert ist, um das Display zum unterschiedlichen Anzeigen einer Hintergrundfarbe des Informationsbereitstellung-Anforderungs-Objekts, einer Stärke/Form/Farbe einer Grenze des Informationsbereitstellungs-Anforderungs-Objekts, eines Bildes oder eines Textes des Informationsbereitstellungs-Anforderungs-Objekts, eines Anzeigeorts des Informationsbereitstellungs-Anforderungs-Objekts, einer Anzeigezeit des Informationsbereitstellungs-Anforderungs-Objekts, und/oder einer Anzeigegeschwindigkeit des Informationsbereitstellungs-Anforderungs-Objekts zu steuern, basierend auf Klassifizierungsreferenzinformationen der Benutzerinformationen, oder
wobei der Prozessor konfiguriert ist, um eine Flimmergeschwindigkeit, eine Flimmerdauer, und/oder eine lichtemittierende Farbe einer Flimmervorrichtung, die an der elektronischen Vorrichtung angebracht ist, zu einem Zeitpunkt zu ändern, zu dem das Informationsbereitstellungs-Anforderungs-Objekt angezeigt wird, basierend auf Klassifizierungsreferenzinformationen der Benutzerinformationen.

5. Elektronische Vorrichtung nach Anspruch 1, wobei der Prozessor des Weiteren konfiguriert ist, um zu bestimmen, ob zu einem Zeitpunkt, zu dem die Sitzung mit der externen Servervorrichtung verbunden ist, zu einem Zeitpunkt, zu dem die Sitzung, die mit der externen Servervorrichtung verbunden ist, beendet ist, oder zu einem Zeitpunkt, zu dem ein Objekt das Anzeigen eines Informationsbereitstellungsverlaufs ermöglicht, in dem Zustand ausgewählt wird, in dem die Sitzung, die mit dem externen Server verbunden ist, aufrechterhalten wird, um das Display zum Anzeigen eines Informationsbereitstellungs-Verlaufs-Objekts einschließlich eines Bereitstellungsverlaufs der Benutzerinformationen zu steuern.

6. Elektronische Vorrichtung nach Anspruch 1, wobei der Prozessor des Weiteren konfiguriert ist, um die Benutzerinformationen zu übertragen, während die mit der externen Servervorrichtung verbundene Sitzung aufrechterhalten wird.

7. Elektronische Vorrichtung nach Anspruch 6, wobei der Prozessor nach Beenden der Sitzung des Weiteren konfiguriert ist, um die externe Servervorrichtung aufzufordern, die übertragenen Benutzerinformationen zu löschen.

8. Elektronische Vorrichtung nach Anspruch 1, welche ferner umfasst:
einen Speicher, der konfiguriert ist, um eine Liste von externen Servervorrichtungen zu speichern, die zum Empfangen der Benutzerinformationen bestimmt sind.

9. Elektronische Vorrichtung nach Anspruch 8, wobei der Speicher konfiguriert ist, um eine mit Benutzerinformationen verbundene Richtlinie der externen Servervorrichtung zusammen mit Identifizierungsinformationen der externen Servervorrichtung zu speichern.

10. Verfahren zum Verarbeiten von Benutzerinformationen in einer elektronischen Vorrichtung, wobei das Verfahren Folgendes umfasst:
Verwalten einer Sitzungsverbindung zwischen der elektronischen Vorrichtung und einer externen Servervorrichtung zum Bereitstellen von Benutzerinformationen für die externe Servervorrichtung;
Bestimmen eines Risikograds der Benutzerinformationen und
Anzeigen eines Informationsbereitstellungs-Zustands-Objekts (530), das einen Benutzerinformationsübertragungszustand anzeigt, während die Benutzerinformationen an die externe Servervorrichtung übertragen werden;
Ändern des Informationsbereitstellungs-Zustands-Objekts (530) durch Ändern eines Bildtyps, einer Helligkeit, einer Form, und/oder einer Transparenz des Informationsbereitstellungs-Zustands-Objekts (530) basierend auf dem Risikograd der Benutzerinformationen; und
Anzeigen des geänderten Informationsbereitstellungs-Zustands-Objekts (530).

11. Verfahren nach Anspruch 10, welches ferner umfasst:
Empfangen einer Benutzereingabe zum Auswählen des Informationsbereitstellungs-Zustands-Objekts; und
Anzeigen eines Informationsbereitstellungs-Zustands-Veränderungs-Objekts, um einem Benutzer zu ermöglichen, den Benutzerbereitstellungszustand zu ändern.

12. Verfahren nach Anspruch 10, welches ferner umfasst:
Bestimmen (420), ob ein Dienst, der von der externen Servervorrichtung bereitgestellt wird, zum ersten Mal verwendet wird oder eine mit Benutzerinformationen verbundene Richtlinie geändert wird, und Anzeigen eines Informationsbereitstellungs-Anforderungs-Objekts, das einem Benutzer ermöglicht, auszuwählen, ob er einer Bereitstellung der Benutzerinformationen zustimmt, wenn der Dienst, der von der externen Servervorrichtung bereitgestellt wird, zum ersten Mal verwendet wird oder eine mit Benutzerinformationen verbundene Richtlinie geändert wird.

13. Verfahren nach Anspruch 10, welches ferner umfasst:
Anzeigen eines Informationsbereitstellungs-Verlaufs-Objekts einschließlich eines Bereitstellungsverlaufs der Benutzerinformationen zu einem Zeitpunkt, zu dem die mit der externen Servervorrichtung verbundene Sitzung verbunden ist, Bestimmen, ob zu einem Zeitpunkt, zu dem die mit der externen Servervorrichtung verbundene Sitzung verbunden ist, zu einem Zeitpunkt, zu dem die mit der externen Servervorrichtung verbundene Sitzung beendet ist, oder zu einem Zeitpunkt, zu dem ein Objekt, das das Anzeigen eines Informationsbereitstellungsverlaufs ermöglicht, in dem Zustand ausgewählt wird, in dem die mit dem externen Server verbundene Sitzung aufrechterhalten wird.

14. Verfahren nach Anspruch 10, welches ferner umfasst:
Übertragen der Benutzerinformationen, während die mit der externen Servervorrichtung verbundene Sitzung aufrechterhalten wird; und
Auffordern der externen Servervorrichtung, die übertragenen Benutzerinformationen zu löschen, wenn die Sitzung beendet ist.

## Revendications

1. Dispositif électronique, comprenant :
une unité d'affichage configuré pour sortir un objet ; et
un processeur configuré pour:
gérer une connexion de session entre le dispositif électronique et un dispositif serveur externe pour fournir des informations d'utilisateur au dispositif serveur externe ;
déterminer un niveau de risque des informations d'utilisateur ; et
commander l'unité d'affichage pour afficher un objet d'état de fourniture d'informations (530) indiquant un état de transmission d'informations d'utilisateur, tandis que les informations d'utilisateur sont transmises au dispositif serveur externe ;
modifier l'objet d'état de fourniture d'informations (530) en changeant au moins l'un parmi un type d'image, une luminosité, une forme, et une transparence de l'objet d'état de fourniture d'informations (530) sur la base du niveau de risque des informations d'utilisateur ; et
commander l'unité d'affichage pour afficher l'objet d'état de fourniture d'informations modifié (530).

2. Dispositif électronique selon la revendication 1, où le processeur est en outre configuré pour :
recevoir une entrée d'utilisateur pour sélectionner l'objet d'état de fourniture d'informations ; et
commander l'unité d'affichage pour afficher un objet de changement d'état de fourniture d'informations pour permettre à un utilisateur de changer l'état de fourniture d'utilisateur.

3. Dispositif électronique selon la revendication 1, où, le processeur est agencé pour déterminer si un service fourni par le dispositif serveur externe est utilisé pour la première fois ou si une politique associée aux informations d'utilisateur est modifiée, et lorsque le service fourni par le dispositif serveur externe est utilisé pour la première fois ou que la politique associée aux informations d'utilisateur est changée, commander l'unité d'affichage pour afficher un objet de demande de fourniture d'informations qui permet à un utilisateur de choisir de permettre ou non la fourniture d'informations d'utilisateur.

4. Dispositif électronique selon la revendication 3, où le processeur est configuré en outre pour commander l'unité d'affichage pour afficher différemment au moins l'un parmi une couleur de fond de l'objet de demande de fourniture d'informations, une épaisseur/forme/couleur d'une limite de l'objet de demande de fourniture d'informations, une image ou un texte de l'objet de demande de fourniture d'informations, un emplacement d'affichage de l'objet de demande de fourniture d'informations, un temps d'affichage de l'objet de demande de fourniture d'informations et une vitesse d'affichage de l'objet de demande de fourniture d'informations, sur la base d'informations de référence de classification des informations d'utilisateur, ou
où le processeur est configuré pour changer au moins l'une parmi une vitesse de scintillement, une durée de scintillement ou une couleur d'émission de lumière d'un dispositif de scintillement attaché au dispositif électronique à un moment où l'objet de demande de fourniture d'informations est affiché, sur la base des informations de référence de classification des informations d'utilisateur.

5. Dispositif électronique selon la revendication 1, où le processeur est configuré en outre pour déterminer, à un moment où la session avec le dispositif serveur externe est connectée, à un moment où la session connectée avec le dispositif serveur externe est terminée ou à un moment où un objet permettant d'afficher un historique de fourniture d'informations est sélectionné dans l'état où la session connectée avec le serveur externe est maintenue, de commander ou non l'unité d'affichage pour afficher un objet d'historique de fourniture d'informations incluant un historique de fourniture des informations d'utilisateur.

6. Dispositif électronique selon la revendication 1, où le processeur est configuré en outre pour transmettre les informations d'utilisateur tandis que la session connectée avec le dispositif serveur externe est maintenue.

7. Dispositif électronique selon la revendication 6, où, lorsque la session est terminée, le processeur est configuré en outre pour demander au dispositif serveur externe de supprimer les informations d'utilisateur transmises.

8. Dispositif électronique selon la revendication 1, comprenant en outre :
une mémoire configurée pour stocker une liste de dispositifs serveurs externes désignés pour recevoir les informations d'utilisateur.

9. Dispositif électronique selon la revendication 8, où la mémoire est configurée pour stocker une politique associée aux informations d'utilisateur du dispositif serveur externe avec des informations d'identification du dispositif serveur externe.

10. Procédé de traitement d'informations d'utilisateur dans un dispositif électronique, le procédé comprenant :
gérer une connexion de session entre le dispositif électronique et un dispositif serveur externe pour fournir des informations d'utilisateur au dispositif serveur externe ;
déterminer un niveau de risque des informations d'utilisateur ; et
afficher un objet d'état de fourniture d'informations (530) indiquant un état de transmission d'informations d'utilisateur, tandis que les informations d'utilisateur sont transmises au dispositif serveur externe ;
modifier l'objet d'état de fourniture d'informations (530) en changeant au moins l'un parmi un type d'image, une luminosité, une forme et une transparence de l'objet d'état de fourniture d'informations (530) sur la base du niveau de risque des informations d'utilisateur ; et
afficher l'objet d'état de fourniture d'informations modifié (530).

11. Procédé selon la revendication 10, comprenant en outre :
recevoir une entrée d'utilisateur pour sélectionner l'objet d'état de fourniture d'informations ; et
afficher un objet de changement d'état de fourniture d'informations pour permettre à un utilisateur de changer l'état de fourniture d'utilisateur.

12. Procédé selon la revendication 10, comprenant en outre :
déterminer (420) si un service fourni par le dispositif serveur externe est utilisé pour la première fois ou si une politique associée aux informations d'utilisateur est changée, et afficher un objet de demande de fourniture d'informations qui permet à un utilisateur de choisir de permettre ou non la fourniture d'informations de l'utilisateur lorsque le service fourni par le dispositif serveur externe est utilisé pour la première fois ou qu'une politique associée aux informations d'utilisateur est modifiée.

13. Procédé selon la revendication 10, comprenant en outre :
afficher un objet d'historique de fourniture d'informations incluant un historique de fourniture des informations d'utilisateur à un moment où la session connectée avec le dispositif serveur externe est connectée, à un moment où la session connectée avec le dispositif serveur externe est terminée ou à un moment où un objet permettant d'afficher un historique de fourniture d'informations est sélectionné dans l'état où la session connectée avec le serveur externe est maintenue.

14. Procédé selon la revendication 10, comprenant en outre :
transmettre les informations d'utilisateur tandis que la session connectée avec le dispositif serveur externe est maintenue ; et
demander au dispositif serveur externe de supprimer les informations d'utilisateur transmises lorsque la session est terminée.
